Europäisches Patentamt

European Patent Office

Office européen des brevets

(19)

(11) **EP 0 649 110 B1**

(12) **FASCICULE DE BREVET EUROPEEN**

(45) Date de publication et mention
de la délivrance du brevet:
**04.09.2002 Bulletin 2002/36**

(51) Int Cl.⁷: **G06K 7/08**, G07C 9/00

(21) Numéro de dépôt: **94402312.6**

(22) Date de dépôt: **14.10.1994**

(54) **Dispositif à pureté spectrale pour l'échange d'informations à distance entre un objet portatif et une station**

Vorrichtung mit spektraler Reinheit zum Austausch von Information zwischen einem tragbaren Gegenstand und einem entfernten stationären Gerät

Device with spectral purity for exchanging at a distance information between a portable object and a station

(84) Etats contractants désignés:
**AT BE CH DE ES FR GB IT LI NL SE**

(30) Priorité: **18.10.1993 FR 9312375**

(43) Date de publication de la demande:
**19.04.1995 Bulletin 1995/16**

(73) Titulaires:
• **FRANCE TELECOM**
**75015 Paris (FR)**
• **LA POSTE**
**92777 Boulogne Billancourt Cédex (FR)**

(72) Inventeur: **Levionnais, Philippe**
**F-14300 Caen (FR)**

(74) Mandataire: **Plaçais, Jean-Yves**
**Cabinet Netter,**
**36, avenue Hoche**
**75008 Paris (FR)**

(56) Documents cités:
EP-A- 0 245 196      EP-A- 0 257 688
WO-A-88/03687      DE-A- 3 130 126
DE-C- 4 029 214      FR-A- 2 640 830
US-A- 4 656 472

## Description

L'invention concerne l'échange d'informations à distance entre un objet portatif et une station.

Elle s'applique particulièrement mais non limitativement à l'échange d'informations entre une carte électronique à mémoire, communément appelée "carte à puce", et un terminal.

Dans le brevet FR-A-2 640 830 (LEVIONNAIS), il est décrit un dispositif pour l'échange d'informations à distance entre un objet portatif et une station.

Dans ce dispositif, la station comprend un oscillateur comprenant des moyens amplificateurs et une boucle de réaction reliant la sortie de ces moyens amplificateurs à leur entrée. La boucle de réaction comporte un montage en parallèle comprenant un élément inductif-station et un diviseur capacitif à deux éléments capacitifs-station. La boucle est susceptible de conférer à l'oscillateur une fréquence de travail variable relativement à une fréquence de repos. Des moyens de traitement-station, reliés à l'oscillateur, sont capables de traiter les variations de la fréquence de travail.

De son côté, l'objet portatif comprend un circuit électronique commutable entre un état inactif et un état actif dans lequel il forme un circuit résonant accordé sur une fréquence distincte de la fréquence de repos, tout en demeurant apte au couplage inductif avec la boucle de réaction à ladite fréquence de repos. Des moyens de traitement-objet sont capables de commuter le circuit électronique en fonction d'informations à transmettre vers la station.

Dans ce genre de dispositif, la variation de la fréquence de travail de l'oscillateur induite par les commutations du circuit électronique de l'objet portatif permet aux moyens de traitement-station d'en déduire les informations transmises entre ledit objet portatif et la station.

Par construction, un oscillateur dans lequel le couple inductance-capacité est en parallèle, constitue un circuit "à haute impédance à la fréquence de résonance". Une telle haute impédance à la fréquence de résonance, associée en outre à une antenne de grande taille (par exemple un portique à travers lequel passe une personne debout) a l'inconvénient non seulement d'engendrer des signaux harmoniques nuisibles, mais aussi de récupérer des signaux parasites qui perturbent le traitement du signal.

De plus, l'oscillateur libre d'un tel dispositif fait glisser la fréquence qu'il génère, ce qui engendre inéluctablement l'émission de rayonnements non essentiels appelés plus communément harmoniques.

Il en résulte que l'environnement radiofréquence du dispositif est encombré inutilement, ce qui peut altérer le bon fonctionnement de la transmission des données d'autres dispositifs radiofréquence disposés à proximité.

Dans le brevet US-A-4656472 (WALTON), la station comporte un oscillateur délivrant une première tension alternative. L'élément inductif et l'élément capacitif de la station sont montés en parallèle et délivrent une seconde tension alternative. Lorsque l'objet portatif n'est pas en couplage avec la station, un compensateur ajuste la phase de la première tension avec la phase de la seconde tension. En présence de l'objet portatif, un comparateur de phase compare la phase des première et seconde tensions, le signal de sortie du comparateur de phase variant positivement ou négativement selon la relation de phase entre les première et seconde tensions. Les informations binaires transmises sont alors déduites du signe du signal de sortie du comparateur de phase.

Un tel dispositif est de mise en place complexe dans la mesure où il requiert un compensateur de phase qui doit égaliser la phase des deux tensions alternatives en l'absence de l'objet portatif. De plus, en raison des dimensions physiques relativement petites de l'antenne de la station, la déduction des informations n'est rendue possible que lorsque le couplage inductif entre la station et l'objet portatif est de qualité, c'est-à-dire lorsque l'objet portatif est relativement proche de l'antenne de la station, lorsque l'objet portatif est relativement statique devant l'antenne de la station, et lorsque l'objet portatif et la station sont accordés à la fréquence de résonance.

En raison de la petite taille de l'antenne, le dispositif est moins sensible aux inconvénients ci-avant liés à la haute impédance du couple inductance-capacité en parallèle de l'antenne.

La présente invention améliore les dispositifs de l'état de la technique mentionnés ci-avant.

Elle porte sur un dispositif du type décrit ci-avant, dans lequel la station comprend un générateur de tension alternative propre à délivrer une première tension choisie, un élément inductif-station, et des moyens de traitement-station, et dans lequel l'objet portatif comprend un circuit électronique commutable entre un état inactif et un état actif dans lequel il forme un circuit couplé avec l'élément inductif-station, et des moyens de traitement-objet capables de commuter le circuit électronique en fonction d'informations à transmettre vers la station.

Selon la caractéristique principale de la présente invention, la station comprend en outre un élément résistif-station possédant une première borne reliée au générateur de tension et une seconde borne reliée à un arrangement en série possédant l'élément inductif-station et un élément capacitif - station ledit arrangement étant susceptible d'engendrer une seconde tension alternative,

dans l'état actif du circuit électronique commutable, la valeur résistive de l'élément inductif-station est augmentée d'une valeur résistive additionnelle tandis que dans l'état inactif ladite valeur résistive de l'élément inductif-station est inchangée,

de sorte que la commutation du circuit électronique entre son état actif et son état inactif et réciproquement fait varier la différence de phase entre les première et seconde tensions alternatives,

tandis que les valeurs des éléments du circuit électronique et celles de la station sont choisies pour que la variation de différence de phase induite par la commutation du circuit électronique soit supérieure à un seuil prédéterminé, et les moyens de traitement-station sont aptes à traiter cette variation de différence de phase pour en déduire lesdites informations.

Par rapport au brevet FR-A-2 640 830, le dispositif selon l'invention a l'avantage de conférer une pureté spectrale, dans la mesure où ledit dispositif permet d'utiliser un générateur de tension aussi pur que l'on souhaite.

De plus, par rapport à ce brevet français et au brevet US-A-4 656 472, le montage selon lequel l'élément inductif-station est monté en série à la suite de l'élément capacitif-station permet d'obtenir une impédance basse à la fréquence de résonance, ce qui évite de récupérer et d'engendrer des signaux parasites susceptibles de perturber le traitement du signal.

Par rapport au brevet US-A-4656472, le dispositif selon l'invention est en outre de mise en place simple et facile puisqu'il n'exige pas de compensateur de phase mais des moyens de mesure de la variation de la différence de phase entre deux tensions.

De plus, le dispositif selon l'invention a l'avantage de déduire des informations, à la différence du Brevet US mentionné ci-avant, même lorsque l'objet portatif est relativement éloigné de l'antenne de la station, lorsque l'objet portatif se déplace devant l'antenne de la station, ou lorsque la surface de l'élément inductif-station est très grande par rapport à la surface de l'élément inductif objet.

Selon un mode de réalisation préféré de l'invention, les moyens de traitement-station comprennent :

- un premier circuit d'adaptation propre à convertir la première tension alternative en un premier signal carré,

- un second circuit d'adaptation propre à convertir la seconde tension alternative en un second signal carré ; et

- un ensemble logique possédant une première entrée reliée à la sortie du premier circuit d'adaptation, une seconde entrée reliée à la sortie du second circuit d'adaptation et une sortie propre à délivrer les informations binaires induites par les variations de phase entre les première et seconde tensions alternatives ainsi converties.

De préférence, chaque circuit d'adaptation comprend un amplificateur opérationnel non inverseur et un circuit de déclenchement relié audit amplificateur opérationnel.

Avantageusement, les moyens de traitement-station comprennent en outre des moyens d'amplification de phase propres à amplifier la variation de phase entre les première et seconde tensions alternatives avant le traitement de celle-ci.

Selon un premier mode de réalisation, les moyens d'amplification de phase suivent une loi trigonométrique.

Selon un second mode de réalisation, les moyens d'amplification de phase suivent une loi spectrale.

La présente invention a également pour objet une installation comprenant une pluralité de dispositifs d'échange d'informations à distance, dont les stations sont accolées sensiblement les unes aux autres.

D'autres caractéristiques et avantages de l'invention apparaîtront à la lumière de la description détaillée ci-après et des dessins annexés dans lesquels :

- la figure 1 représente schématiquement un dispositif d'échange d'informations associé au contrôle d'accès selon l'art antérieur ;

- la figure 2 représente schématiquement les éléments constitutifs d'une carte à puce selon l'art antérieur ;

- la figure 3 est une représentation schématique des éléments constitutifs d'une station selon l'invention ;

- la figure 4 représente des chronogrammes illustrant schématiquement le fonctionnement du dispositif côté station selon l'invention ;

- la figure 5 est un schéma détaillé des moyens d'adaptation selon l'invention ;

- la figure 6 représente schématiquement les éléments essentiels et constitutifs des moyens d'amplification de phase à loi trigonométrique selon l'invention ; et

- la figure 7 représente schématiquement les éléments essentiels et constitutifs des moyens d'amplification de phase à loi spectrale selon l'invention.

Les dessins comportent pour l'essentiel des éléments de caractère certain. A ce titre, ils font partie intégrante de la description et pourront non seulement servir à mieux faire comprendre la description ci-après, mais aussi à contribuer, le cas échéant, à la définition de l'invention.

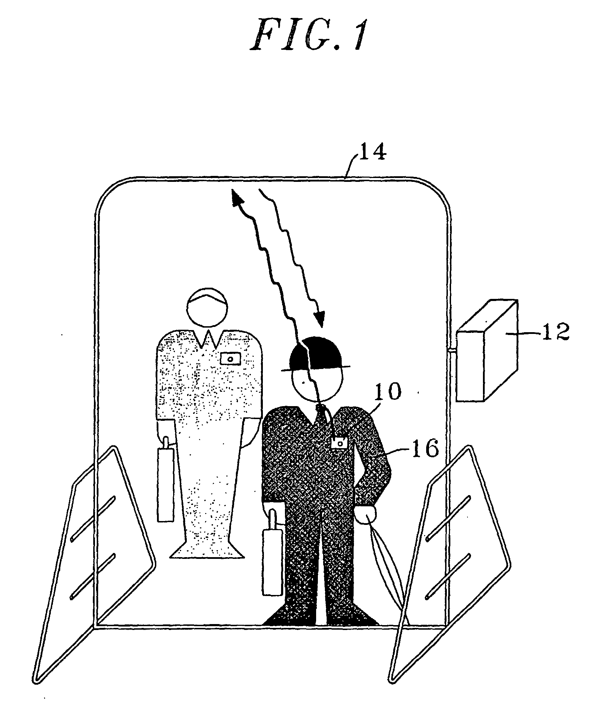

Selon la figure 1, dans une application particulière de l'invention, aucunement limitative, l'objet portatif 10 est du type carte à mémoire, et la station est un terminal 12 équipé d'un portique inductif 14 dans lequel est susceptible de passer une personne 16 munie de la carte à mémoire 10.

Dans le document FR-A-2 640 830 mentionné ci-avant, la variation de fréquence du signal produit par l'oscillateur est utilisée pour la transmission d'informations depuis l'objet portatif vers la station.

Dans la présente invention, le terminal est modifié dans sa structure, comme on le décrira plus en détail ci-après, tandis que la carte présente les mêmes éléments et exerce les mêmes fonctions dans le sens de la transmission de données terminal vers station.

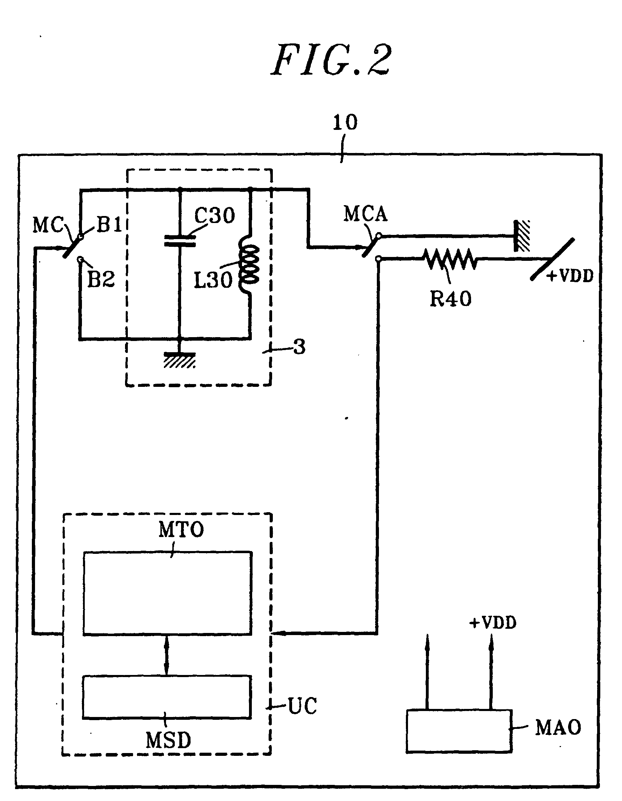

Ainsi, conformément à la figure 2, la carte 10 est du type carte à mémoire standard, c'est-à-dire d'un format d'environ 85 mm x 55 mm. Elle comporte un circuit électronique 3 possédant un élément inductif-objet L30 ayant une valeur inductive sensiblement égale à 6 $\mu$H et une valeur résistive intrinsèque R30 sensiblement égale à 6,3 Ohms.

Cet élément inductif L30 est destiné à être placé en couplage inductif avec l'élément inductif du terminal (que l'on décrira plus en détail ci-après) lors du passage du porteur de la carte dans le portique.

Aux bornes de cet élément inductif L30 est placé un élément capacitif-objet C30 dont la valeur capacitive est choisie pour former avec cet élément inductif L30 un circuit résonant avec l'élément inductif de la station.

Le circuit électronique 3 est commutable entre deux états par l'intermédiaire de moyens de commutation MC, représentés ici schématiquement par un interrupteur, susceptible de court-circuiter les deux bornes B1 et B2 de l'élément capacitif C30 (ou de l'élément inductif L30). Ainsi, on définit un état actif dans lequel, l'interrupteur MC étant ouvert, le circuit électronique 3 forme un circuit résonant avec le terminal, et à l'état inactif dans lequel, l'interrupteur MC étant fermé, les bornes respectives des éléments capacitif C30 et inductif L30 sont court-circuitées et reliées à la masse.

Les moyens de commutation MC sont commandés par des moyens de traitement-objet MTO reliés à des moyens de stockage d'informations MSD. Ces moyens MTO et MSD font partie de l'unité centrale qui, dans le cas particulier d'une carte à mémoire, comprend le micro-contrôleur de cette carte ainsi que ses mémoires implicitement associées.

Une entrée des moyens de traitement-objet MTO est susceptible d'être reliée soit à la masse, soit à une tension prédéterminée +VDD délivrée par des moyens d'alimentation-objet MAO. Le choix de cette liaison dépend de moyens de commutation additionnels MCA commandés par le circuit résonant de la carte 10, c'est-à-dire le circuit électronique 3 dans son état actif.

L'homme du métier se référera au document mentionné ci-avant pour avoir des renseignements plus détaillés sur les composants de la carte à puce, en ayant à l'esprit que la présente invention se distingue de ce document par le fait que l'utilisation du phénomène physique entre la carte et le terminal est modifiée au niveau dudit terminal, tandis que le protocole de communication terminal vers carte est identique à celui dudit document.

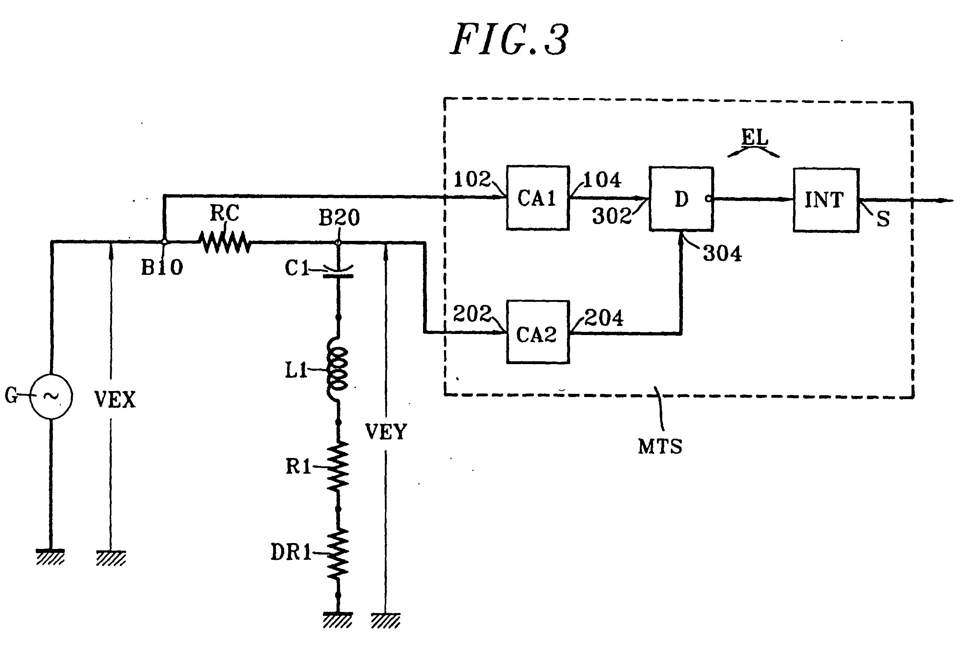

En référence à la figure 3, le terminal 12 selon l'invention comprend un générateur de tension alternative G propre à délivrer une première tension choisie VEX.

Par exemple, le générateur G délivre une tension alternative, fixe et stable d'une valeur sensiblement égale à 2 V efficace à la fréquence de 6,78 MHz, par exemple.

La borne B10 d'une résistance RC est reliée au générateur G.

Un arrangement en série est relié à la seconde borne B20 de la résistance RC.

Cet arrangement en série comprend l'élément inductif-station L1 mentionné ci-avant et un élément capacitif-station C1. Par exemple, la valeur inductive de l'élément inductif L1 est de l'ordre de 5 $\mu$H. La capacité C1 a une valeur de l'ordre de 100 pico F. La résistance RC a une valeur sensiblement égale à 50 Ohms.

Il est à remarquer que l'élément inductif L1 est formé par le portique à l'intérieur duquel est susceptible de passer la personne munie de sa carte. Cet élément inductif constitue une spire rectangulaire dont une borne est reliée à l'élément capacitif C1 et dont l'autre borne est reliée à la masse. Les dimensions du cadre inductif L1 sont celles d'une porte standard, c'est-à-dire environ 2 m pour la hauteur et 80 cm pour la largeur. Il est à remarquer que la valeur inductive de L1 est complétée par une valeur résistive intrinsèque R1 égale sensiblement à 4 Ohms.

L'arrangement C1, L1 et R1 est susceptible d'engendrer, au générateur G, une seconde tension alternative VEY, la différence de phase entre les première et seconde tensions étant variable. Par exemple, la seconde tension VEY a une valeur sensiblement égale à 1,9 V efficace.

Lorsque le circuit électronique 3 de la carte à mémoire est dans son état actif, la valeur résistive R1 de l'élément inductif-station L1 se trouve augmentée de la quantité DR1 donnée par la formule I (en annexe). De préférence, le rapport de la valeur du terme résistif additionnel DR1 sur la valeur résistive R1 de l'élément inductif-station L1 est supérieur à une valeur choisie. Par exemple, la valeur numérique du terme résistif additionnel DR1 est de l'ordre de 0,18 Ohm.

Le choix des valeurs capacitive et résistive des éléments C1 et RC va contribuer à obtenir une variation significative de la phase entre les tensions VEX et VEY lorsque le cadre L1 sera en couplage inductif avec la carte à mémoire.

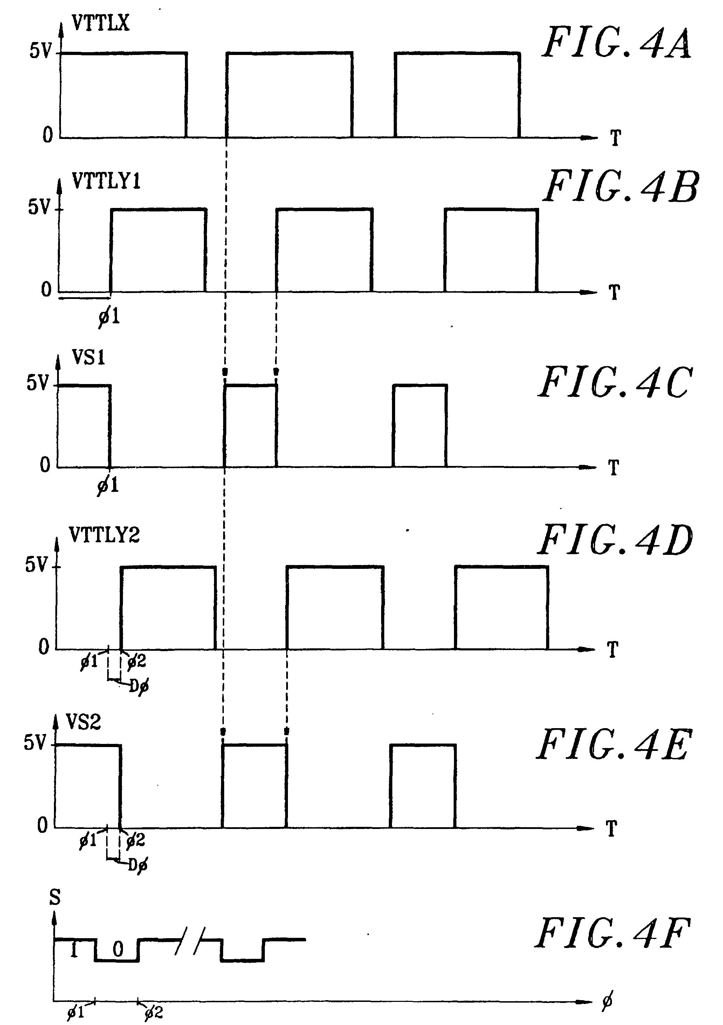

Les informations à transmettre depuis la carte jusqu'au terminal sont stockées dans les moyens de stockage MSD sous la forme de données binaires 0 ou 1. Lors d'une transmission de telles informations, les moyens de traitement-objet MTO commandent le circuit électronique 3 dans son état actif ou non actif suivant la valeur de la donnée binaire. La différence de phase D$\phi$ (figures 4D, 4E) entre les tensions VEX et VEY passe donc d'une première valeur de φ1 (figure 4B) à une seconde valeur φ2 (figure 4D) et inversement selon la donnée binaire transmise. Les moyens de traitement-station MTS analysent ces différentes variations et en déduisent l'information transmise.

Pour effectuer l'analyse de ces variations, les moyens de traitement-station MTS comprennent :

- un premier circuit d'adaptation CA1 propre à convertir la première tension alternative VEX en un premier signal carré VTTLX (figure 4A) et possédant une première entrée 102 reliée à la première borne B10 et une sortie 104 ;

- un second circuit d'adaptation CA2 propre à convertir la seconde tension alternative VEY en un second signal carré VTTLY (figures 4B et 4D) et possédant une première entrée 202 reliée à la seconde borne B20 et une sortie 204.

Les moyens de traitement-station MTS sont complétés par un ensemble logique EL possédant une première entrée 302 reliée à la sortie 104 du premier circuit d'adaptation CA1, une seconde entrée 304 reliée à la sortie 204 du second circuit d'adaptation CA2 et une sortie S propre à délivrer les informations binaires induites par les variations de phase entre les première et seconde tensions alternatives ainsi converties.

Par exemple, l'ensemble logique EL comprend une bascule de type D, dont la première entrée 302 est une entrée d'horloge, et dont la seconde entrée 304 est une entrée clear.

Enfin, les moyens de traitement MTS comprennent des moyens d'intégration INT reliés à la sortie de la bascule D pour délivrer des variations de la valeur moyenne du signal induites par les informations binaires émises par la carte.

Avantageusement, chaque circuit d'adaptation CA1 et CA2 comprend un circuit d'amplification opérationnel non inverseur propre à supprimer les variations de phase parasites provoquées le cas échéant par l'environnement inductif du terminal.

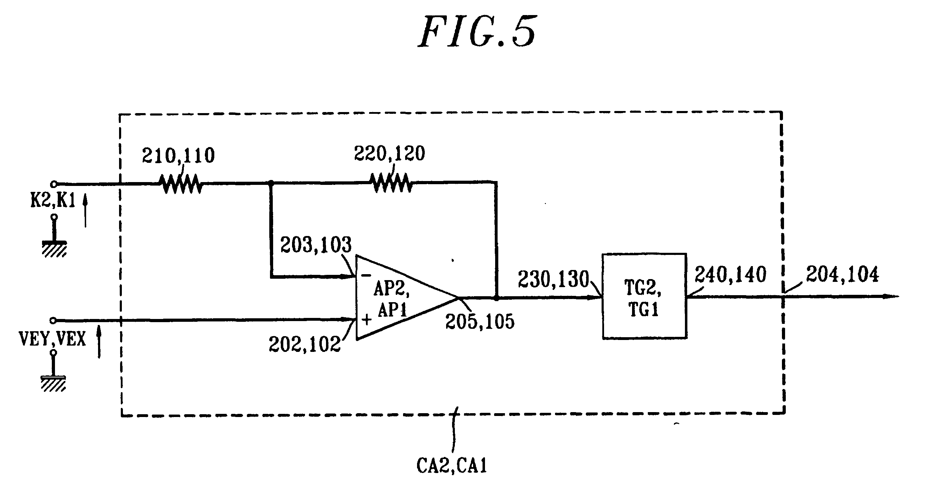

En référence à la figure 5, on a représenté les moyens d'adaptation CA2 ou CA1.

Ils comprennent chacun un amplificateur opérationnel AP2 ou AP1 propres à amplifier les tensions VEY ou VEX et possédant une première entrée 202 ou 102 reliée à la borne B20 ou B10, une seconde entrée 203 ou 103 recevant une tension de référence K2 ou K1 à travers une résistance 210 ou 110 et une sortie 205 ou 105. La sortie 205 ou 105 de l'amplificateur opérationnel AP2 ou AP1 est reliée à un circuit de commutation TG2 ou TG1, par exemple un trigger de Schmitt, possédant une entrée 230 ou 130 reliée à la sortie 205 ou 105 de l'amplificateur AP2 ou AP1 et une sortie 240 ou 140 propre à délivrer un signal de déclenchement. Le circuit de commutation TG2 ou TG1 est relié aux moyens d'intégration INT qui délivrent le flux binaire d'informations.

Le montage non inverseur permet ici de s'affranchir des petites variations de phase qui peuvent se produire au niveau du terminal. En effet, l'amplificateur non inverseur décale le signal de sortie amplifié d'une tension correspondant à la tension de référence K2 ou K1 appliquée à l'entrée inverseuse 203 ou 103.

Pour cela, il faut choisir une tension de référence K2 ou K1 égale à la tension de déclenchement de l'élément de commutation TG2 ou TG1.

Par exemple, la tension de référence K2 a une valeur sensiblement égale à 1,7 V.

Par exemple, l'élément de commutation TG1 ou TG2 de type trigger de Schmitt est celui vendu sous la référence 74ACT74.

La résistance 210 ou 110 a une valeur de 649 Ohms.

Par ailleurs, une résistance 220 ou 120 est prévue entre l'entrée inverseuse 203 ou 103 et la sortie 205 ou 105. Elle a une valeur de 649 Ohms pour le circuit CA2 et 866 Ohms pour le circuit CA1.

On se réfère maintenant aux figures 4A à 4F qui sont des chronogrammes illustrant le fonctionnement du dispositif selon l'invention.

Sur la figure 4A, on a représenté le signal carré VTTLX issu du premier circuit d'adaptation CA1.

Il s'agit d'un signal carré, de 5 V à l'état haut et de 0 V à l'état bas dans la mesure où le circuit d'adaptation est en technologie TTL. Ce signal VTTLX est une représentation numérique du signal alternatif VEX.

Sur la figure 4B, on a représenté le signal carré VTTLY1 issu du second circuit d'adaptation CA2 en l'absence de couplage inductif entre le terminal et la carte. Il s'agit d'un signal carré, de 5 V à l'état haut et de 0 V à l'état bas en technologie TTL.

Ce signal VTTLX est une représentation numérique du signal alternatif VEY en l'absence de couplage inductif entre la carte et le terminal.

La différence de phase φ1 entre VTTLX et VTTLY est représentée sur l'axe temporel T des abscisses.

Sur la figure 4C, on a représenté le signal carré VS1 issu de la bascule D lorsque les signaux VTTLX et VTTLY1 sont respectivement appliqués aux première et seconde entrées de la bascule D.

Le front montant du signal VS1 est déterminé par le front montant du signal VTTLX, et le front descendant du signal VS1 est déterminé par le front montant du signal VTTLY1.

Sur la figure 4D, on a représenté le signal carré VTTLY2 issu du second circuit d'adaptation CA2 en présence du couplage inductif entre le terminal et la carte.

Comme dans la figure 4B, il s'agit d'un signal carré de 5 V à l'état haut et de 0 V à l'état bas.

Ce signal VTTLY2 est une représentation numérique du signal alternatif en présence de couplage inductif entre le terminal et la carte.

La différence de phase φ2 entre VTTLX et VTTLY est ici représentée sur l'axe temporel T.

Compte tenu du couplage inductif entre la carte et le terminal, la phase $\phi 2$ du signal VTTLY2 est différente de la phase $\phi 1$ du signal VTTLY1.

C'est cette différence entre $\phi 2$ et $\phi 1$, appelée ci-après $D\phi$, qui permet de déduire les informations transmises de la carte vers le terminal. Par exemple, la valeur $D\phi$ est de l'ordre de $0,5°$.

Sur la figure 4E, on a représenté le signal carré VS2 issu de la bascule D lorsque les signaux VTTLX et VTTLY2 sont respectivement appliqués aux première et seconde entrées de la bascule D.

Le front montant du signal VS2 est déterminé par le front montant du signal VTTLX, et le front descendant du signal VS2 est déterminé par le front montant du signal VTTLY2.

Sur la figure 4F, on a représenté le signal S issu des moyens intégrateurs INT.

Le signal S représente les informations transmises par la carte vers le terminal ainsi obtenues par les moyens de traitement MTS.

Pour ce qui concerne la transmission d'informations dans le sens terminal vers carte, elle se réalise simplement par l'application ou la non application d'une tension aux bornes de l'élément inductif-objet L30, comme indiqué dans le Brevet PR-A-2 640 830.

Comme décrit ci-avant, la variation de phase, ou plus exactement la variation de la différence de phase entre les tensions alternatives VEX et VEY, induites par les données à transmettre de l'objet portatif vers la station, permet aux moyens de traitement-station d'en déduire les informations ainsi transmises.

Toutefois, dans certains cas, notamment lors de l'utilisation d'une station ayant une antenne cadre (portique) de grandes dimensions, ou lors d'utilisations particulières, par exemple lorsque l'objet portatif est incliné par rapport au portique, ou bien encore lorsque l'objet portatif est à proximité d'un objet métallique, la variation de phase entre les tensions alternatives peut devenir faible et par conséquent donner un rapport signal à bruit difficilement exploitable.

La présente invention a également pour objet d'apporter une solution à ce problème.

Ce résultat est obtenu par des moyens de traitement-station qui comprennent en outre des moyens d'amplification de phase propres à amplifier la variation de phase entre les première et seconde tensions avant le traitement de celle-ci.

Selon un premier mode de réalisation, les moyens d'amplification de phase suivent une loi trigonométrique.

Dans un second mode de réalisation, les moyens d'amplification de phase suivent une loi spectrale.

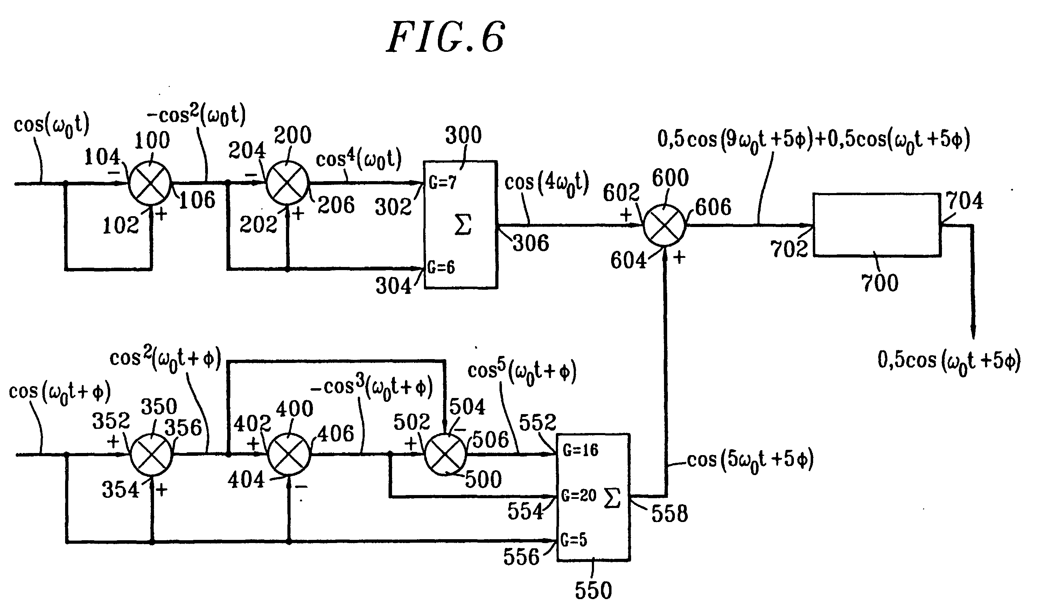

Sur la figure 6, on a représenté les moyens d'amplification de phase suivant la loi trigonométrique.

Dans ce mode de réalisation, les tensions VEX et VEY sont respectivement égales à $\cos(\omega_0 t)$ et $\cos(\omega_0 t$

$+ \phi)$. Le paramètre $\phi$ représente ici la différence de phase entre ces deux tensions au temps $t = 0$.

Selon l'invention, les moyens d'amplification de phase délivrent à la fin du traitement une valeur de sortie égale à $\cos(\omega_0 t + n\phi)$ où n est un entier positif à partir d'une valeur d'entrée égale à $\cos(\omega_0 t + \phi)$. Pour simplifier la description, on appellera ci-après amplification de phase le second terme $n\phi$ de l'expression de phase $\omega_0 t + n\phi$.

En référence à la figure 6, à la fin de la chaîne d'amplification, la phase à l'origine des temps du signal de sortie est multipliée par n = 5. Bien entendu, d'autres valeurs n peuvent convenir.

Plus précisément, les moyens d'amplification de phase comprennent ici :

- un premier multiplieur 100 possédant une entrée positive 102 reliée à la première borne B10 pour recevoir la tension alternative VEX correspondant au signal $\cos(\omega_0 t)$, une entrée négative 104 reliée à la première borne B10 et une sortie 106 délivrant le signal $- \cos^2(\omega_0 t)$ ;

- un second multiplieur 200 possédant une entrée positive 202 reliée à la sortie 106 de premier multiplieur 100, une entrée négative 204 reliée à la sortie 106 du premier multiplieur 100, et une sortie 206 délivrant le signal $\cos^4(\omega_0 t)$ ;

- un premier additionneur 300 possédant une première entrée 302 ayant un gain choisi G = 7, reliée à la sortie 206 du second multiplieur 200, une seconde entrée 304 ayant un gain choisi G = 6, reliée à la sortie 106 du premier multiplieur 100, et une sortie 306 propre à délivrer un signal représentatif d'un multiple n - 1 de la pulsation $\omega_0$ de la première tension alternative VEX (ici $\cos(4\omega_0 t)$ avec n - 1 = 4) ;

- un troisième multiplieur 350 possédant une première entrée positive 352 reliée à la seconde borne B20 pour recevoir la seconde tension alternative VEY correspondant au signal $\cos(\omega_0 t + \phi)$, une seconde entrée positive 354 reliée à la seconde borne B20, et une sortie 356 délivrant le signal $\cos^2(\omega_0 t + \phi)$ ;

- un quatrième multiplieur 400 possédant une entrée positive 402 reliée à la sortie 356 du troisième multiplieur 350, une entrée négative 404 reliée à la seconde borne B20, et une sortie 406 délivrant le signal $- \cos^3(\omega_0 t + \phi)$ ;

- un cinquième multiplieur 500 possédant une entrée positive 502 reliée à la sortie 406 du quatrième multiplieur 400, une entrée négative 504 reliée à la sortie 356 du troisième multiplieur 350, et une sortie 506 délivrant le signal $\cos^5(\omega_0 t + \phi)$ ;

- un second additionneur 550 possédant une première entrée 552, ayant un gain choisi G = 16, reliée à la sortie 506 du cinquième multiplieur 500, une seconde entrée 554, ayant un gain choisi G = 20, reliée à la sortie 406 du quatrième multiplieur 400, une troisième entrée 556, ayant un gain choisi G = 5, reliée à la seconde borne B20, et une sortie 558 propre à délivrer un signal représentatif d'un multiple n de la pulsation de la seconde tension alternative VEY (ici $\cos(5\omega_0 t + 5\phi)$ avec n = 5) ;

- un sixième multiplieur 600 possédant une première entrée positive 602 reliée à la sortie 306 du premier additionneur 300, une seconde entrée positive 604 reliée à la sortie 558 du second additionneur 550, et une sortie 606 délivrant le signal $0,5 \cos(9\omega_0 t + 5\phi) + 0,5 \cos(\omega_0 t + 5\phi)$ ;

- un filtre passe-bas 700 réglé sur la pulsation de la première tension alternative VEX, ou de la seconde tension alternative VEY et possédant une entrée 702 reliée à la sortie 606 du sixième multiplieur 600 et une sortie 704 propre à délivrer un signal représentatif de la variation de phase définie entre les première VEX et seconde VEY tensions alternatives, amplifiée d'un facteur n (ici $0,5 \cos(\omega_0 t + 5\phi)$ avec n = 5).

L'homme du métier comprendra qu'à la fin de la chaîne d'amplification, la phase à l'origine des temps du signal de sortie est multipliée par 5.

En pratique, les multiplieurs sont des multiplieurs de type à 4 cadrans, par exemple ceux vendus par la Société ANALOG DEVICE sous la référence AD734.

Les premier et second additionneurs sont constitués à partir d'amplificateurs opérationnels.

Le gain d'une entrée d'un additionneurs est obtenu par le rapport des valeurs ohmiques des résistances disposées en amont de l'additionneur.

Par exemple, la fréquence $F_0 (\omega_0 = 2\pi F_0)$ de la première ou seconde tension alternative VEX ou VEY est égale 6,78 MHz, et sa tension est de l'ordre de 2 V. L'amplification de phase est ici de 5 dans la mesure où les multiplieurs AD734 ne supportent pas une fréquence supérieure à 43 MHz.

Bien évidemment, avec d'autres composants, il est possible d'obtenir un gain de phase supérieur.

Le filtre passe-bas 700 est par exemple un filtre de type Butterworth ou Tchebyscheff.

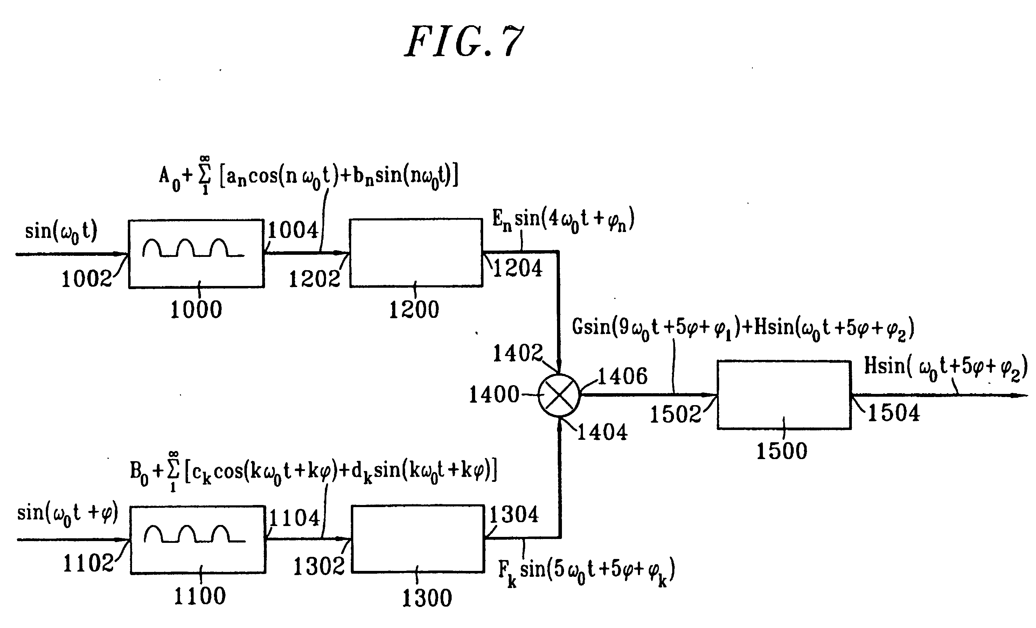

Sur la figure 7, on a représenté le mode de réalisation des moyens d'amplification de phase qui suivent une loi spectrale.

D'une façon générale, la loi spectrale consiste ici à obtenir des harmoniques des deux signaux d'entrée VEX et VEY et de choisir ensuite l'harmonique de rang n pour la voie VEY et n - 1 pour la voie VEX. Enfin, il convient de multiplier ces deux voies pour obtenir un signal de sortie dont la phase est amplifiée d'un coefficient n après filtrage des signaux indésirables.

Plus précisément, les moyens d'amplification de phase suivant une loi spectrale comprennent :

- un premier circuit redresseur 1000 propre à distordre la première tension alternative VEX, correspondant au signal $\sin(\omega_0 t)$, en un premier signal mono-alternance, et possédant une entrée 1002 reliée à la première borne B10, et une sortie 1004 délivrant le signal :

$$A_0 + \Sigma[(a_n \cos(n\omega_0 t) + b_n \sin(n\omega_0 t)] ;$$

- un second circuit redresseur 1100 propre à distordre la seconde tension alternative VEY correspondant au signal $\sin(\omega_0 t + \phi)$ en un second signal mono-alternance, et possédant une entrée 1102 reliée à la seconde borne B20, et une sortie 1104 délivrant le signal :

$$B_0 + \Sigma[(c_k \cos(k \omega_0 t + k\phi) + d_k \sin(k\omega_0 t + k\phi)] ;$$

- un premier filtre passe-bande 1200 propre à laisser passer une gamme de fréquences centrée sur un multiple n - 1 de la fréquence de la première tension alternative VEX et possédant une entrée 1202 reliée à la sortie 1004 du premier circuit de distorsion, et une sortie 1204 délivrant le signal :

$$E_n \sin(4\omega_0 t + \phi_n) ;$$

- un second filtre passe-bande 1300 propre à laisser passer une gamme de fréquences centrée sur un multiple n de la fréquence de la seconde tension alternative VEY et possédant une entrée 1302 reliée à la sortie 1104 du second circuit de distorsion 1100, et une sortie 1304 délivrant le signal :

$$F_k \sin(5\omega_0 t + 5\phi + \phi_k) ;$$

- un multiplieur 1400 possédant une première entrée 1402 reliée à la sortie 1204 du premier filtre passe-bande 1200, une seconde entrée 1404 reliée à la sortie 1304 du second filtre passe-bande 1300, et une sortie 1406 délivrant le signal :

$$G \sin(9 \omega_0 t + 5\phi + \theta_1) + H \sin(\omega_0 t + 5\theta + \phi_2) ;$$

- un filtre passe-bas 1500 réglé sur la fréquence de la première tension alternative VEX ou de la seconde tension alternative VEY et possédant une entrée 1502 reliée à la sortie 1406 du multiplieur 1400, et une sortie 1504 propre à délivrer un signal représentatif de la variation de phase entre les première et seconde tensions alternatives amplifiée d'un facteur n (ici H $\sin(\omega_0 t + 5\theta + \phi_2)$ avec n = 5.

L'entier n est ici égal à 4, soit un facteur d'amplification de 5, ce qui peut être considéré comme suffisant pour améliorer le rapport signal à bruit.

En pratique, le multiplieur est du type à 4 cadrans, par exemple celui vendu par la' Société ANALOG DEVICE sous la référence AD734.

Les circuits redresseurs sont par exemple constitués d'un montage résistance-diode avec une résistance de l'ordre de 50 Ohms et une diode simple telle que celle vendue sous la référence D1N4148.

Les filtres passe-bande sont par exemple du type Butterworth ou Tchebyscheff.

Les phases $\phi_n$, $\phi_1$, $\phi_2$ et $\phi_k$ sont des phases négligeables dans la mesure où elles sont constantes et imposées par la technologie des circuits.

Les paramètres $A_0$, $a_n$, $b_n$, $B_0$, $c_k$, $d_k$, $E_n$, $F_k$, G, H sont utilisés ici pour décomposer les signaux utiles selon une méthode mathématique bien connue de l'homme du métier sous le nom de transformée de Fourier. Ils n'interviennent pas directement pour l'obtention de l'amplification d'un facteur n de la variation de phase entre les tensions VEX et VEY.

Il est à remarquer que la solution suivant la loi spectrale utilise moins de composants que celle suivant la loi trigonométrique. Il en résulte qu'elle est moins chère et plus facile de réalisation.

### ANNEXE

Formule I

$$DR1 = \frac{M^2 \cdot W^2}{R30} = 0{,}18 \; Ohm$$

avec

M mutuelle induction entre L1 et L30 = $2{,}5 \; 10^{-8}$ H
W = fréquence du générateur = 6,78 MHz
R30 = résistance intrinsèque de L30 = 6,3Ohms.

### Revendications

**1.** Dispositif pour l'échange d'informations à distance entre une station (12) et un objet portatif (10), dans lequel la station (12) comprend un générateur de tension alternative (G) propre à délivrer une première tension choisie (VEX), un élément inductif-station (L1), et des moyens de traitement-station (MTS), et dans lequel l'objet portatif (10) comprend un circuit électronique commutable (3) entre un état inactif et un état actif dans lequel il forme un circuit couplé avec l'élément inductif-station (L1), et des moyens de traitement-objet (MTO) capables de commuter le circuit électronique (3) en fonction d'informations à transmettre vers la station, **caractérisé en ce que** la station (12) comprend en outre un élément résistif-station (RC) possédant une première borne (B10) reliée au générateur de tension (G) et une seconde borne (B20) reliée à un arrangement en série possédant l'élément inductif-station (L1) et un élément capacitif-station (C1), ledit arrangement étant susceptible d'engendrer une seconde tension alternative (VEY),

**en ce que** dans l'état actif du circuit électronique commutable (3), la valeur résistive de l'élément inductif-station (L1) est augmentée d'une valeur résistive additionnelle (DR1) tandis que dans l'état inactif ladite valeur résistive de l'élément inductif-station (L1) est inchangée,

de sorte que la commutation du circuit électronique entre son état actif et son état inactif et réciproquement, fait varier la différence de phase (D$\phi$) entre les première (VEX) et seconde (VEY) tensions alternatives,

tandis que les valeurs des éléments du circuit électronique (3) et celles de la station (R1, C1, L1, RC) sont choisies pour que la variation de la différence de phase (D$\phi$) induite par la commutation du circuit électronique (3) soit supérieure à un seuil prédéterminé, et

**en ce que** les moyens de traitement-station (MTS) sont aptes à traiter cette variation de différence de phase (D$\phi$) pour en déduire lesdites informations.

**2.** Dispositif selon l'une des revendications précédentes, **caractérisé en ce que** les moyens de traitement-station (MTS) comprennent:

- un premier circuit d'adaptation (CA1) propre à convertir la première tension alternative (VEX) en un premier signal carré (VTTLX) et possédant une première entrée reliée à la première borne (B10), une seconde entrée recevant une première tension de référence (K1) et une sortie,

- un second circuit d'adaptation (CA2) propre à convertir la seconde tension alternative (VEY) en un second signal carré (VTTLY) et possédant une première entrée reliée à la seconde borne (B20), une seconde entrée recevant une seconde tension de référence (K2), et une sortie,

- un ensemble logique (EL) possédant une première entrée reliée à la sortie du premier circuit d'adaptation (CA1), une seconde entrée reliée à la sortie du second circuit d'adaptation (CA2), et une sortie propre à délivrer les informations binaires (S) induites par les variations de phase entre les première et seconde tensions alternatives ainsi converties.

3. Dispositif selon la revendication 2, **caractérisé en ce que** le premier circuit d'adaptation (CA1) comprend :

   - un premier amplificateur opérationnel non inverseur (AP1) possédant une première entrée (102) reliée à la première borne (B10), une seconde entrée (103) recevant la première tension de référence (K1) à travers une première résistance (110), et une sortie (105),

   - un premier circuit de commutation (TG1) possédant une entrée (130) reliée à la sortie (105) du premier amplificateur (AP1) et une sortie (140) propre à délivrer un premier signal de déclenchement.

4. Dispositif selon la revendication 2, **caractérisé en ce que** le second circuit d'adaptation (CA2) comprend :

   - un second amplificateur opérationnel non inverseur (AP2) possédant une première entrée (202) reliée à la seconde borne (B20), une seconde entrée (203) recevant la seconde tension de référence (K2) à travers une première résistance (210) et une sortie (205), et

   - un second circuit de commutation (TG2) possédant une entrée (230) reliée à la sortie (205) du second amplificateur (AP2) et une sortie (240) propre à délivrer un second signal de déclenchement.

5. Dispositif selon les revendications 2 à 4, **caractérisé en ce que** l'ensemble logique (EL) comprend :

   - une bascule (D) possédant une première entrée (302) reliée à la sortie du premier circuit de commutation (TG1), une seconde entrée (304) reliée à la sortie du second circuit de commutation (TG2) et une sortie, et

   - des moyens d'intégration (INT) possédant une entrée reliée à la sortie de la bascule (D) et une sortie (S) délivrant les informations ainsi transmises.

6. Dispositif selon l'une des revendications précédentes, **caractérisé en ce que** le rapport de la valeur du terme résistif additionnel (DR1) sur la valeur résistive de l'élément inductif-station (L1) est supérieur à une valeur choisie.

7. Dispositif selon l'une des revendications précédentes, **caractérisé en ce que** la station comprend un portique inductif formant l'élément inductif-station.

8. Dispositif selon l'une des revendications précédentes, **caractérisé en ce que** l'objet portatif est du type carte, badge, carte à mémoire ou analogue.

9. Dispositif selon les revendications 7, et 8, **caractérisé en ce que** l'élément inductif de la station est formé par un portique dont les dimensions en hauteur et en largeur permettent le passage d'un homme debout tandis que les dimensions de l'élément inductif de l'objet portatif sont au format d'une carte à mémoire.

10. Dispositif selon l'une quelconques des précédentes revendications, **caractérisé en ce que** les moyens de traitement-station comprennent en outre des moyens d'amplification de phase propres à amplifier la variation de différence de phase (Dϕ) entre les première (VEX) et seconde (VEY) tensions avant le traitement de celle-ci.

11. Dispositif selon la revendication 9, **caractérisé en ce que** les moyens d'amplification de phase comprennent :

   - un premier circuit redresseur (1000) propre à distordre la première tension alternative (VEX) en un premier signal mono-alternance, et possédant une entrée (1002) reliée à la première borne (B10) et une sortie (1004) ;

   - un second circuit redresseur (1100) propre à distordre la seconde tension alternative (VEY) en un second signal mono-alternance, et possédant une entrée (1102) reliée à la seconde borne (B20) et une sortie (1104) ;

   - un premier filtre passe-bande (1200) propre à laisser passer une gamme de fréquences centrée sur un multiple n - 1 de la fréquence de la première tension alternative (VEX) et possédant une entrée (1202) reliée à la sortie (1004) du premier circuit de distorsion (1000) et une sortie (1204) ;

   - un second filtre passe-bande (1300) propre à laisser passer une gamme de fréquences centrée sur un multiple n de la fréquence de la seconde tension alternative (VEY) et possédant une entrée (1302) reliée à la sortie (1104) du second circuit de distorsion (1100) et une sortie (1304) ;

- un multiplieur (1400) possédant une première entrée (1402) reliée à la sortie (1204) du premier filtre passe-bande (1200), une seconde entrée (1404) reliée à la sortie (1304) du second filtre passe-bande (1300) et une sortie (1406) ;

- un filtre passe-bas (1500) réglé sur la fréquence de la première tension alternative (VEX) et possédant une entrée (1502) reliée à la sortie (1406) du multiplieur (1400) et une sortie (1504) propre à délivrer un signal représentatif de la variation de phase entre les première (VEX) et seconde (VEY) tensions amplifiée d'un facteur n.

**12.** Dispositif selon la revendication 11, **caractérisé en ce que** n est égal à cinq.

**13.** Dispositif selon la revendication 10, **caractérisé en ce que** les moyens d'amplification de phase comprennent:

- un premier multiplieur (100) possédant une entrée positive (102) reliée à la première borne (B10), une entrée négative (104) reliée à la première borne (B10) et une sortie (106) ;

- un second multiplieur (200) possédant une entrée positive (202) reliée à la sortie (106) du premier multiplieur (100), une entrée négative (204) reliée à la sortie (106) du premier multiplieur (100) et une sortie (206) ;

- un premier additionneur (300) possédant une première entrée (302), ayant un gain choisi, reliée à la sortie du second multiplieur, une seconde entrée (304), ayant un gain choisi, reliée à la sortie (106) du premier multiplieur (100) et une sortie (300) propre à délivrer un signal représentatif d'un multiple n - 1 de la fréquence de la première tension alternative (VEX) ;

- un troisième multiplieur (350) possédant une première entrée positive (352) reliée à la seconde borne (B20), une seconde entrée positive reliée à la seconde borne (B20) et une sortie ;

- un quatrième multiplieur (400) possédant une entrée positive (402) reliée à la sortie (356) du troisième multiplieur (350), une entrée négative (404) reliée à la seconde borne (B20), et une sortie (406) ;

- un cinquième multiplieur (500) possédant une entrée positive (502) reliée à la sortie (406) du quatrième multiplieur (400), une entrée négative (504) reliée à la sortie (356) du troisième multiplieur (350) et une sortie (506) ;

- un second additionneur (550) possédant une première entrée (552), ayant un gain choisi, reliée à la sortie (506) du cinquième multiplieur (500), une seconde entrée (354), ayant un gain choisi, reliée à la sortie (406) du quatrième multiplieur (400), une troisième entrée (556), ayant un gain choisi, reliée à la seconde borne (B20) et une sortie (358) propre à délivrer un signal représentatif d'un multiple n de la fréquence de la seconde tension alternative (VEY) ;

- un sixième multiplieur (600) possédant une première entrée positive (602) reliée à la sortie (306) du premier additionneur (300), une seconde entrée positive (604) reliée à la sortie (558) du second additionneur (550) et une sortie (606) ;

- un filtre passe-bas (700) réglé sur la fréquence de la première tension alternative (VEX) et possédant une entrée (702) reliée à la sortie (606) du sixième multiplieur (600) et une sortie (704) propre à délivrer un signal représentatif de la variation de phase entre les première (VEX) et seconde (VEY) tensions alternatives amplifiée d'un facteur n.

**14.** Installation **caractérisée en ce qu'**elle comprend une pluralité de dispositifs d'échange d'informations à distance, selon l'une des précédentes revendications, dont les stations sont accolées sensiblement les unes aux autres.

**15.** Station appartenant à un dispositif pour l'échange d'informations à distance entre une station (12) et un objet portatif (10), dans lequel la station (12) comprend un générateur de tension alternative (G) propre à délivrer une première tension choisie (VEX), un élément inductif-station (L1) et des moyens de traitement-station (MTS), et dans lequel l'objet portatif (10) comprend un circuit électronique commutable (3) entre un état inactif et un état actif dans lequel il forme un circuit couplé avec l'élément inductif-station (L1), et des moyens de traitement-objet (MTO) capables de commuter le circuit électronique (3) en fonction d'informations à transmettre vers la station, **caractérisée en ce que** la station (12) comprend en outre un élément résistif-station (RC) possédant une première borne (B10) reliée au générateur de tension (G) et une seconde borne (B20) reliée à un arrangement en série possédant l'élément inductif-station (L1) et un élément capacitif-station (C1), ledit arrangement étant susceptible d'engendrer une seconde tension alternative (VEY),

**en ce que** dans l'état actif du circuit électronique commutable (3), la valeur résistive de l'élément inductif-station (L1) est augmentée d'une valeur résistive additionnelle (DR1) tandis que dans l'état inactif ladite valeur résistive de l'élément inductif-station (L1) est inchangée,

de sorte que la commutation du circuit électronique entre son état actif et son état inactif et réciproquement fait varier la différence de phase (Dφ) entre les première (VEX) et seconde (VEY) tensions alternatives,

tandis que les valeurs des éléments du circuit électronique (3) et celles de la station (R1, C1, L1, RC) sont choisies pour que la variation de la différence de phase (Dφ) induite par la commutation du circuit électronique (3) soit supérieure à un seuil prédéterminé, et

**en ce que** les moyens de traitement-station (MTS) sont aptes à traiter cette variation de différence de phase (Dφ) pour en déduire lesdites informations.

16. Station destinée à échanger des informations à distance avec un objet portatif (10) destiné à avoir un état actif et un état inactif, la station (12) étant du type comprenant un générateur de tension alternative (G) propre à délivrer une première tension choisie (VEX), un élément inductif-station (L1) destiné à former un circuit couplé avec l'objet portatif, et des moyens de traitement-station (MTS), **caractérisée en ce que** la station (12) comprend en outre un élément résistif-station (RC) possédant une première borne (B10) reliée au générateur de tension (G) et une seconde borne (B20) reliée à un arrangement en série possédant l'élément inductif-station (L1) et un élément capacitif-station (C1), ledit arrangement étant susceptible d'engendrer une seconde tension alternative (VEY),

**en ce que** dans l'état actif de l'objet portatif, la valeur résistive de l'élément inductif-station (L1) est augmentée d'une valeur résistive additionnelle (DR1) tandis que dans l'état inactif ladite valeur résistive de l'élément inductif-station (L1) est inchangée, de sorte que la commutation de l'objet portatif entre son état actif et son état inactif et réciproquement est destinée à faire varier la différence de phase (Dφ) entre les première (VEX) et seconde (VEY) tensions alternatives,

tandis que les valeurs de l'objet portatif et de la station (R1, C1, L1, RC) sont destinées à être choisies pour que la variation de la différence de phase (Dφ) induite par la commutation de l'objet portatif soit supérieure à un seuil prédéterminé, et

**en ce que** les moyens de traitement-station (MTS) sont aptes à traiter cette variation de différence de phase (Dφ) pour en déduire les informations transmises par l'objet portatif.

17. Station selon la revendication 16, **caractérisée en**
ce que les moyens de traitement-station (MTS) comprennent:

- un premier circuit d'adaptation (CA1) propre à convertir la première tension alternative (VEX) en un premier signal carré (VTTLX) et possédant une première entrée reliée à la première borne (B10), une seconde entrée recevant une première tension de référence (K1) et une sortie,

- un second circuit d'adaptation (CA2) propre à convertir la seconde tension alternative (VEY) en un second signal carré (VTTLY) et possédant une première entrée reliée à la seconde borne (B20), une seconde entrée recevant une seconde tension de référence (K2), et une sortie,

- un ensemble logique (EL) possédant une première entrée reliée à la sortie du premier circuit d'adaptation (CA1), une seconde entrée reliée à la sortie du second circuit d'adaptation (CA2), et une sortie propre à délivrer les informations binaires (S) induites par les variations de phase entre les première et seconde tensions alternatives ainsi converties.

18. Station selon la revendication 17, **caractérisée en ce que** le premier circuit d'adaptation (CA1) comprend :

- un premier amplificateur opérationnel non inverseur (AP1) possédant une première entrée (102) reliée à la première borne (B10), une seconde entrée (103) recevant la première tension de référence (K1) à travers une première résistance (110), et une sortie (105),

- un premier circuit de commutation (TG1) possédant une entrée (130) reliée à la sortie (105) du premier amplificateur (AP1) et une sortie (140) propre à délivrer un premier signal de déclenchement.

19. Station selon la revendication 17, **caractérisée en ce que** le second circuit d'adaptation (CA2) comprend :

- un second amplificateur opérationnel non inverseur (AP2) possédant une première entrée (202) reliée à la seconde borne (B20), une seconde entrée (203) recevant la seconde tension de référence (K2) à travers une première résistance (210) et une sortie (205), et

- un second circuit de commutation (TG2) possédant une entrée (230) reliée à la sortie (205) du second amplificateur (AP2) et une sortie (240) propre à délivrer un second signal de déclenchement.

**20.** Station selon les revendications 17 à 19, **caractérisée en ce que** l'ensemble logique (EL) comprend :

- une bascule (D) possédant une première entrée (302) reliée à la sortie du premier circuit de commutation (TG1), une seconde entrée (304) reliée à la sortie du second circuit de commutation (TG2) et une sortie, et

- des moyens d'intégration (INT) possédant une entrée reliée à la sortie de la bascule (D) et une sortie (S) délivrant les informations ainsi transmises.

**21.** Station selon l'une des revendications 16 à 20, **caractérisée en ce que** le rapport de la valeur du terme résistif additionnel (DR1) sur la valeur résistive de l'élément inductif-station (L1) est supérieur à une valeur choisie.

**22.** Station la selon l'une des revendications 16 à 21, **caractérisée en ce que** la station comprend un portique inductif formant l'élément inductif-station.

**23.** Station selon la revendication 22 , **caractérisée en ce que** l'élément inductif de la station est formé par un portique dont les dimensions en hauteur et en largeur permettent le passage d'un homme debout.

**24.** Station selon l'une quelconques des revendications 16 à 23, **caractérisée en ce que** les moyens de traitement-station comprennent en outre des moyens d'amplification de phase propres à amplifier la variation de différence de phase (Dφ) entre les première (VEX) et seconde (VEY) tensions avant le traitement de celle-ci.

**25.** Station selon la revendication 24, **caractérisée en ce que** les moyens d'amplification de phase comprennent :

- un premier circuit redresseur (1000) propre à distordre la première tension alternative (VEX) en un premier signal mono-alternance, et possédant une entrée (1002) reliée à la première borne (B10) et une sortie (1004) ;

- un second circuit redresseur (1100) propre à distordre la seconde tension alternative (VEY) en un second signal mono-alternance, et possédant une entrée (1102) reliée à la seconde borne (B20) et une sortie (1104) ;

- un premier filtre passe-bande (1200) propre à laisser passer une gamme de fréquences centrée sur un multiple n - 1 de la fréquence de la première tension alternative (VEX) et possédant une entrée (1202) reliée à la sortie (1004) du premier circuit de distorsion (1000) et une sortie (1204) ;

- un second filtre passe-bande (1300) propre à laisser passer une gamme de fréquences centrée sur un multiple n de la fréquence de la seconde tension alternative (VEY) et possédant une entrée (1302) reliée à la sortie (1104) du second circuit de distorsion (1100) et une sortie (1304) ;

- un multiplieur (1400) possédant une première entrée (1402) reliée à la sortie (1204) du premier filtre passe-bande (1200), une seconde entrée (1404) reliée à la sortie (1304) du second filtre passe-bande (1300) et une sortie (1406) ;

- un filtre passe-bas (1500) réglé sur la fréquence de la première tension alternative (VEX) et possédant une entrée (1502) reliée à la sortie (1406) du multiplieur (1400) et une sortie (1504) propre à délivrer un signal représentatif de la variation de phase entre les première (VEX) et seconde (VEY) tensions amplifiée d'un facteur n.

**26.** Station selon la revendication 25, **caractérisée en ce que** n est égal à cinq.

**27.** Station selon la revendication 25, **caractérisée en ce que** les moyens d'amplification de phase comprennent:

- un premier multiplieur (100) possédant une entrée positive (102) reliée à la première borne (B10), une entrée négative (104) reliée à la première borne (B10) et une sortie (106) ;

- un second multiplieur (200) possédant une entrée positive (202) reliée à la sortie (106) du premier multiplieur (100), une entrée négative (204) reliée à la sortie (106) du premier multiplieur (100) et une sortie (206) ;

- un premier additionneur (300) possédant une première entrée (302), ayant un gain choisi, reliée à la sortie du second multiplieur, une seconde entrée (304), ayant un gain choisi, reliée à la sortie (106) du premier multiplieur (100) et une sortie (300) propre à délivrer un signal représentatif d'un multiple n - 1 de la fréquence de la première tension alternative (VEX) ;

- un troisième multiplieur (350) possédant une première entrée positive (352) reliée à la seconde borne (B20), une seconde entrée positive reliée à la seconde borne (B20) et une sortie ;

- un quatrième multiplieur (400) possédant une entrée positive (402) reliée à la sortie (356) du troisième multiplieur (350), une entrée négative (404) reliée à la seconde borne (B20), et une sortie (406) ;

- un cinquième multiplieur (500) possédant une entrée positive (502) reliée à la sortie (406) du quatrième multiplieur (400), une entrée négative (504) reliée à la sortie (356) du troisième multiplieur (350) et une sortie (506) ;

- un second additionneur (550) possédant une première entrée (552), ayant un gain choisi, reliée à la sortie (506) du cinquième multiplieur (500), une seconde entrée (354), ayant un gain choisi, reliée à la sortie (406) du quatrième multiplieur (400), une troisième entrée (556), ayant un gain choisi, reliée à la seconde borne (B20) et une sortie (358) propre à délivrer un signal représentatif d'un multiple n de la fréquence de la seconde tension alternative (VEY) ;

- un sixième multiplieur (600) possédant une première entrée positive (602) reliée à la sortie (306) du premier additionneur (300), une seconde entrée positive (604) reliée à la sortie (558) du second additionneur (550) et une sortie (606) ;

- un filtre passe-bas (700) réglé sur la fréquence de la première tension alternative (VEX) et possédant une entrée (702) reliée à la sortie (606) du sixième multiplieur (600) et une sortie (704) propre à délivrer un signal représentatif de la variation de phase entre les première (VEX) et seconde (VEY) tensions alternatives amplifiée d'un facteur n.

**Patentansprüche**

1. Vorrichtung zum Datenfernaustausch zwischen einer Station (12) und einem tragbaren Gegenstand (10), wobei die Station (12) folgendes umfasst:

- einen Wechselspannungsgenerator (G), der sich dazu eignet, eine erste ausgewählte Spannung (VEX) abzugeben,
- ein stationsseitiges induktives Element (L1) und stationsseitige Verarbeitungseinrichtungen (MTS), und wobei der tragbare Gegenstand (10) eine elektronische Schaltung (3) aufweist, die zwischen einem inaktiven und einem aktiven Zustand umschaltbar ist, wobei sie eine mit dem stationsseitigen induktiven Element (L1) gekoppelte Schaltung ausbildet, und

- gegenstandsseitige Verarbeitungseinrichtungen (MTO), welche die elektronische Schaltung (3) in Abhängigkeit von den zur Station zu übertragenden Daten umschalten können,

**dadurch gekennzeichnet, dass**
die Station (12) ferner ein stationsseitiges Widerstandselement (RC) mit einer ersten, an den Spannungsgenerator (G) angeschlossenen Klemme (B10) und einer zweiten Klemme (B20) aufweist, die an eine Reihenanordnung angeschlossen ist, die das stationsseitige induktive Element (L1) und ein stationsseitiges Kondensatorelement (C1) aufweist, wobei die Anordnung eine zweite Wechselspannung (VEY) erzeugen kann;

- der Widerstandswert des stationsseitigen induktiven Elements (L1) im aktiven Zustand der umschaltbaren elektronischen Schaltung (3) um einen zusätzlichen Widerstandswert (DR1) erhöht ist, während im inaktiven Zustand der Widerstandswert des stationsseitigen induktiven Elements (L1) unverändert ist, so dass die Umschaltung der elektronischen Schaltung von ihrem aktiven zu ihrem inaktiven Zustand und umgekehrt, den Phasenunterschied (Dφ) zwischen der ersten (VEX) und der zweiten (VEY) Wechselspannung schwanken lässt, während die Werte der Elemente der elektronischen Schaltung (3) und die Werte der Elemente der Station (R1, C1, L1, RC) so ausgewählt sind, dass die Schwankung des durch die Umschaltung der elektronischen Schaltung (3) induzierten Phasenunterschieds (Dφ) über einem vorbestimmten Schwellenwert liegt, und dass die stationsseitigen Verarbeitungseinrichtungen (MTS) dazu ausgelegt sind, diese Schwankung des Phasenunterschieds (Dφ) zu verarbeiten, um daraus die Daten abzuleiten.

2. Vorrichtung nach Anspruch 1,
 **dadurch gekennzeichnet, dass**
die stationsseitigen Verarbeitungseinrichtungen (MTS) umfassen:

- eine erste Anpassungsschaltung (CA1), die sich dazu eignet, die erste Wechselspannung (VEX) in ein erstes Rechtecksignal (VTTLX) umzuwandeln, mit einem ersten Eingang, der an die erste Klemme (B10) angeschlossen ist, wobei ein zweiter Eingang eine erste Bezugsspannung (K1) aufnimmt, und mit einem Ausgang,

- eine zweite Anpassungsschaltung (CA2), die sich dazu eignet, die zweite Wechselspannung (VEY) in ein zweites Rechtecksignal (VTTLY) umzuwandeln, und mit einem ersten Eingang, der an die zweite Klemme (B20) angeschlossen ist, wobei ein zweiter Eingang eine zweite Bezugsspannung (K2) aufnimmt, und mit einem Ausgang,
- eine Logikeinheit (EL) mit einem ersten Eingang, der an den Ausgang der ersten Anpassungsschaltung (CA1) angeschlossen ist, einem zweiten Eingang, der an den Ausgang der zweiten Anpassungsschaltung (CA2) angeschlossen ist, und mit einem Ausgang, der sich dazu eignet, die Binärdaten (S) zu liefern, die durch die Phasenschwankungen zwischen der auf diese Weise umgewandelten ersten und zweiten Wechselspannung induziert werden.

3. Vorrichtung nach Anspruch 2,
   **dadurch gekennzeichnet, dass**
   die erste Anpassungsschaltung (CA1) umfasst:

   - einen ersten nicht umkehrenden Funktionsverstärker (AP1) mit einem ersten Eingang (102), der an die erste Klemme (B10) angeschlossenen ist, wobei ein zweiter Eingang (103) die erste Bezugsspannung (K1) über einen ersten Widerstand (110) aufnimmt, und einem Ausgang (105),
   - einen ersten Schaltkreis (TG1) mit einem Eingang (130), der an den Ausgang (105) des ersten Verstärkers (AP1) angeschlossen ist, und mit einem Ausgang (140), der sich dazu eignet, ein erstes Auslösesignal abzugeben.

4. Vorrichtung nach Anspruch 2,
   **dadurch gekennzeichnet, dass**
   die zweite Anpassungsschaltung (CA2) umfasst:

   - einen zweiten nicht umkehrenden Funktionsverstärker (AP2) mit einem ersten Eingang (202), der an die zweite Klemme (B20) angeschlossen ist, wobei ein zweiter Eingang (203) die zweite Bezugsspannung (K2) über einen ersten Widerstand (210) aufnimmt, und mit einem Ausgang (205), und
   - einen zweiten Schaltkreis (TG2) mit einem Eingang (230), der an den Ausgang (205) des zweiten Verstärkers (AP2) angeschlossen ist, und einem Ausgang (240), der sich dazu eignet, ein zweites Auslösesignal abzugeben.

5. Vorrichtung nach den Ansprüchen 2 bis 4,
   **dadurch gekennzeichnet, dass** die Logikeinheit (EL) umfasst:

   - eine Kippschaltung (D) mit einem ersten Eingang (302), der an den Ausgang des ersten Schaltkreises (TG1) angeschlossen ist, wobei ein zweiter Eingang (304) an den Ausgang des zweiten Schaltkreises (TG2) angeschlossen ist, und mit einem Ausgang, und
- Integrationseinrichtungen (INT) mit einem Eingang, der an den Ausgang der Kippschaltung (D) angeschlossenen ist, und einem Ausgang (S), der die auf diese Weise übertragenen Daten liefert.

6. Vorrichtung nach einem der vorhergehenden Ansprüche,
   **dadurch gekennzeichnet, dass**
   das Verhältnis des Werts des zusätzlichen Widerstandsglieds (DR1) zum Widerstandswert des stationsseitigen induktiven Elements (L1) höher ist als ein ausgewählter Wert.

7. Vorrichtung nach einem der vorhergehenden Ansprüche,
   **dadurch gekennzeichnet, dass**
   die Station eine induktive Brücke umfasst, die das stationsseitige induktive Element bildet.

8. Vorrichtung nach einem der vorhergehenden Ansprüche,
   **dadurch gekennzeichnet, dass**
   der tragbare Gegenstand vom Typ der Karte, des Ansteckers, der Speicherkarte oder dergleichen ist.

9. Vorrichtung nach den Ansprüchen 7 und 8,
   **dadurch gekennzeichnet, dass**
   das induktive Element der Station durch eine Brücke gebildet ist, deren Höhen- und Breitenabmessungen den Durchgang eines aufrechtstehenden Menschen zulassen, während die Abmessungen des induktiven Elements des tragbaren Gegenstands das Format einer Speicherkarte haben.

10. Vorrichtung nach einem der vorhergehenden Ansprüche,
    **dadurch gekennzeichnet, dass**
    die stationsseitigen Verarbeitungseinrichtungen darüber hinaus Phasenverstärkungseinrichtungen umfassen, die sich dazu eignen, vor deren Verarbeitung, die Schwankung des Phasenunterschieds (D$\phi$) zwischen der ersten (VEX) und der zweiten (VEY) Spannung zu verstärken.

11. Vorrichtung nach Anspruch 9,
    **dadurch gekennzeichnet, dass**
    die Phasenverstärkungseinrichtungen umfassen:

    - eine erste Gleichrichterschaltung (1000), die sich dazu eignet, die erste Wechselspannung (VEX) zu einem ersten Einfachwechselsignal zu verzerren, mit einem Eingang (1002), der an die erste Klemme (B10) angeschlossen ist, und einem Ausgang (1004);

- eine zweite Gleichrichterschaltung (1100), die sich dazu eignet, die zweite Wechselspannung (VEY) zu einem zweiten Einfachwechselsignal zu verzerren, mit einem Eingang (1102), der an die zweite Klemme (B20) angeschlossen ist, und einem Ausgang (1104);

- ein erstes Bandpassfilter (1200), das sich dazu eignet, einen Frequenzbereich durchzulassen, dessen Mittenfrequenz ein Vielfaches n - 1 der Frequenz der ersten Wechselspannung (VEX) ist, mit einem Eingang (1202), der an den Ausgang (1004) der ersten Verzerrungsschaltung (1000) angeschlossen ist, und einem Ausgang (1204);

- ein zweites Bandpassfilter (1300), das sich dazu eignet, einen Frequenzbereich durchzulassen, dessen Mittenfrequenz ein Vielfaches n der Frequenz der zweiten Wechselspannung (VEY) ist, mit einem Eingang (1302), der an den Ausgang (1104) der zweiten Verzerrungsschaltung (1100) angeschlossen ist, und einem Ausgang (1304);

- einen Vervielfacher (1400) mit einem ersten Eingang (1402), der an den Ausgang (1204) des ersten Bandpassfilters (1200) angeschlossen ist, einem zweiten Eingang (1404), der an den Ausgang (1304) des zweiten Bandpassfilters (1300) angeschlossen ist, und einem Ausgang (1406);

- ein Bandpassfilter (1500), das auf die Frequenz der ersten Wechselspannung (VEX) eingestellt ist, mit einem Eingang (1502), der an den Ausgang (1406) des Vervielfachers (1400) angeschlossen ist, und einem Ausgang (1504), der sich dazu eignet, ein Signal abzugeben, das für die um einen Faktor n verstärkte Phasenschwankung zwischen der ersten (VEX) und zweiten (VEY) Spannung steht.

12. Vorrichtung nach Anspruch 11, **dadurch gekennzeichnet, dass** n gleich 5 ist.

13. Vorrichtung nach Anspruch 10, **dadurch gekennzeichnet, dass** die Phasenverstärkungseinrichtungen umfassen:

- einen ersten Vervielfacher (100) mit einem positiven Eingang (102), der an die erste Klemme (B10) angeschlossen ist, einem negativen Eingang (104), der an die erste Klemme (B10) angeschlossen ist, und einem Ausgang (106);

- einen zweiten Vervielfacher (200) mit einem positiven Eingang (202), der an den Ausgang (106) des ersten Vervielfachers (100) angeschlossen ist, einem negativen Eingang (204), der an den Ausgang (106) des ersten Vervielfachers (100) angeschlossen ist, und einem Ausgang (206);

- einen ersten Addierer (300) mit einem, einen ausgewählten Verstärkungsfaktor aufweisenden, ersten Eingang (302), der an den Ausgang des zweiten Vervielfachers angeschlossen ist, einem, einen ausgewählten Verstärkungsfaktor aufweisenden, zweiten Eingang (304), der an den Ausgang (106) des ersten Vervielfachers (100) angeschlossen ist, und einem Ausgang (300), der sich dazu eignet, ein Signal abzugeben, das für ein Vielfaches n - 1 der Frequenz der ersten Wechselspannung (VEX) steht;

- einen dritten Vervielfacher (350) mit einem ersten positiven Eingang (352), der an die zweite Klemme (B20) angeschlossen ist, einem zweiten positiven Eingang, der an die zweite Klemme (B20) angeschlossen ist, und einem Ausgang;

- einen vierten Vervielfacher (400) mit einem positiven Eingang (402), der an den Ausgang (356) des dritten Vervielfachers (350) angeschlossen ist, einem negativen Eingang (404), der an die zweite Klemme (B20) angeschlossen ist, und einem Ausgang (406);

- einen fünften Vervielfacher (500) mit einem positiven Eingang (502), der an den Ausgang (406) des vierten Vervielfachers (400) angeschlossen ist, einem negativen Eingang (504), der an den Ausgang (356) des dritten Vervielfachers (350) angeschlossen ist, und einem Ausgang (506);

- einen zweiten Addierer (550) mit einem, einen ausgewählten Verstärkungsfaktor aufweisenden, ersten Eingang (552), der an den Ausgang des fünften Vervielfachers (500) angeschlossen ist, einem, einen ausgewählten Verstärkungsfaktor aufweisenden, zweiten Eingang (354), der an den Ausgang (406) des vierten Vervielfachers (400) angeschlossen ist, einem, einen ausgewählten Verstärkungsfaktor aufweisenden, dritten Eingang (556), der an die zweite Klemme (B20) angeschlossen ist, und einem Ausgang (358), der sich dazu eignet, ein Signal abzugeben, das für ein Vielfaches n der Frequenz der zweiten Wechselspannung (VEY) steht;

- einen sechsten Vervielfacher (600) mit einem ersten positiven Eingang (602), der an den Ausgang (306) des ersten Addierers (300) angeschlossen ist, einem zweiten positiven Eingang (604), der an den Ausgang (558) des zweiten Addierers (550) angeschlossen ist, und einem Ausgang (606);

- ein Bandpassfilter (700), das auf die Frequenz der ersten Wechselspannung (VEX) eingestellt ist, mit einem Eingang (702), der an den Ausgang (606) des sechsten Vervielfachers (600) angeschlossen ist, und einem Ausgang (704), der sich dazu eignet, ein Signal abzugeben, das für die um einen Faktor n verstärkte Phasenschwankung zwischen der ersten (VEX) und der zweiten (VEY) Wechselspannung steht.

14. Anlage,

**dadurch gekennzeichnet, dass**

sie eine Mehrzahl an Datenfernaustauschvorrichtungen nach einem der vorhergehenden Ansprüche umfasst, deren Stationen im wesentlichen aneinandergereiht sind.

15. Station, gehörend zu einer Vorrichtung zum Datenfernaustausch zwischen einer Station (12) und einem tragbaren Gegenstand (10), bei der die Station (12) folgendes umfasst:

- einen Wechselspannungsgenerator (G), der sich dazu eignet, eine erste ausgewählte Spannung (VEX) abzugeben,
- ein stationsseitiges induktives Element (L1) und stationsseitige Verarbeitungseinrichtungen (MTS), und wobei der tragbare Gegenstand (10) eine elektronische Schaltung (3) umfasst, die zwischen einem inaktiven und einem aktiven Zustand umschaltbar ist, wobei sie eine mit dem stationsseitigen induktiven Element (L1) gekoppelte Schaltung ausbildet, und gegenstandsseitige Verarbeitungseinrichtungen (MTO), die die elektronische Schaltung (3) in Abhängigkeit von den zur Station zu übertragenden Daten umschalten können,

**dadurch gekennzeichnet, dass**

- die Station (12) ferner ein stationsseitiges Widerstandselement (RC) mit einer ersten, an den Spannungsgenerator (G) angeschlossenen Klemme (B10) und einer zweiten Klemme (B20)aufweist, die an eine Reihenanordnung angeschlossen ist, die das stationsseitige induktive Element (L1) und ein stationsseitiges Kondensatorelement (C1) aufweist, wobei die Anordnung eine zweite Wechselspannung (VEY) erzeugen kann;
- der Widerstandswert des stationsseitigen induktiven Elements (L1) im aktiven Zustand der umschaltbaren elektronischen Schaltung (3) um einen zusätzlichen Widerstandswert (DR1) erhöht ist, während im inaktiven Zustand der Widerstandswert des stationsseitigen induktiven Elements (L1) unverändert ist, so dass die Umschaltung der elektronischen Schaltung von ihrem aktiven zu ihrem inaktiven Zustand und umgekehrt, den Phasenunterschied (Dφ) zwischen der ersten (VEX) und der zweiten (VEY) Wechselspannung schwanken lässt, während die Werte der Elemente der elektronischen Schaltung (3) und die Werte der Elemente der Station (R1, C1, L1, RC) so ausgewählt sind, dass die Schwankung des durch die Umschaltung der elektronischen Schaltung (3) induzierten Phasenunterschieds (Dφ) über einem vorbestimmten Schwellenwert liegt, und

- die stationsseitigen Verarbeitungseinrichtungen (MTS) dazu ausgelegt sind, diese Schwankung des Phasenunterschieds (Dφ) zu verarbeiten, um daraus die Daten abzuleiten.

16. Station, die dazu bestimmt ist, Daten mit einem tragbaren Gegenstand (10) fernauszutauschen, der dazu bestimmt ist, einen aktiven Zustand und einen inaktiven Zustand aufzuweisen, wobei die Station (12) von dem Typ ist, der folgendes umfasst:

- einen Wechselspannungsgenerator (G), der sich dazu eignet, eine erste ausgewählte Spannung (VEX) abzugeben,
- ein stationsseitiges induktives Element (L1), das dazu bestimmt ist, eine mit dem tragbaren Gegenstand gekoppelte Schaltung auszubilden, und
- stationsseitige Verarbeitungseinrichtungen (MTS),

**dadurch gekennzeichnet, dass**

die Station (12) darüber hinaus ein stationsseitiges Widerstandselement (RC) umfasst mit einer ersten Klemme (B10), die an den Spannungsgenerator (G) angeschlossen ist, und einer zweiten Klemme (B20), die an eine Reihenanordnung angeschlossen ist, die das stationsseitige induktive Element (L1) und ein stationsseitiges Kondensatorelement (C1) aufweist, wobei die Reihenanordnung eine zweite Wechselspannung (VEY) erzeugen kann,

- im aktiven Zustand des tragbaren Gegenstands der Widerstandswert des stationsseitigen induktiven Elements (L1) um einen zusätzlichen Widerstandswert (DR1) erhöht ist, während im inaktiven Zustand der Widerstandswert des stationsseitigen induktiven Elements (L1) unverändert ist, so dass die Umschaltung des tragbaren Gegenstands von seinem aktiven Zustand zu seinem inaktiven Zustand und umgekehrt dazu bestimmt ist, den Phasenunterschied (Dφ) zwischen der ersten (VEX) und der zweiten (VEY) Wechselspannung schwanken zu lassen, während die Werte des tragbaren Gegenstands und der Station (R1, C1, L1, RC) dazu bestimmt sind, so ausgewählt zu werden, dass die Schwankung des durch die Umschaltung des tragbaren Gegenstands induzierten Phasenunterschieds (Dφ) über einem vorbestimmten Schwellenwert liegt, und

- die stationsseitigen Verarbeitungseinrichtungen (MTS) dazu ausgelegt sind, diese Schwankung des Phasenunterschieds (Dφ) zu verarbeiten, um daraus die vom tragbaren Gegenstand übermittelten Daten abzuleiten.

17. Station nach Anspruch 16,
    **dadurch gekennzeichnet, dass**
    die stationsseitigen Verarbeitungseinrichtungen (MTS) umfassen:

    - eine erste Anpassungsschaltung (CA1), die sich dazu eignet, die erste Wechselspannung (VEX) in ein erstes Rechtecksignal (VTTLX) umzuwandeln, mit einem ersten Eingang, der an die erste Klemme (B10) angeschlossen ist, wobei ein zweiter Eingang eine erste Bezugsspannung (K1) aufnimmt, und mit einem Ausgang,
    - eine zweite Anpassungsschaltung (CA2), die sich dazu eignet, die zweite Wechselspannung (VEY) in ein zweites Rechtecksignal (VTTLY) umzuwandeln, und mit einem ersten Eingang, der an die zweite Klemme (B20) angeschlossen ist, wobei ein zweiter Eingang eine zweite Bezugsspannung (K2) aufnimmt, und mit einem Ausgang,
    - eine Logikeinheit (EL) mit einem ersten Eingang, der an den Ausgang der ersten Anpassungsschaltung (CA1) angeschlossen ist, einem zweiten Eingang, der an den Ausgang der zweiten Anpassungsschaltung (CA2) angeschlossen ist, und mit einem Ausgang, der sich dazu eignet, die Binärdaten (S) zu liefern, die durch die Phasenschwankungen zwischen der auf diese Weise umgewandelten ersten und zweiten Wechselspannung induziert werden.

18. Station nach Anspruch 17,
    **dadurch gekennzeichnet, dass**
    die erste Anpassungsschaltung (CA1) umfasst:

    - einen ersten nicht umkehrenden Funktionsverstärker (AP1) mit einem ersten Eingang (102), der an die erste Klemme (B10) angeschlossenen ist, wobei ein zweiter Eingang (103) die erste Bezugsspannung (K1) über einen ersten Widerstand (110) aufnimmt, und einem Ausgang (105),
    - einen ersten Schaltkreis (TG1) mit einem Eingang (130), der an den Ausgang (105) des ersten Verstärkers (AP1) angeschlossen ist, und mit einem Ausgang (140), der sich dazu eignet, ein erstes Auslösesignal abzugeben.

19. Station nach Anspruch 17,
    **dadurch gekennzeichnet, dass**
    die zweite Anpassungsschaltung (CA2) umfasst:

    - einen zweiten nicht umkehrenden Funktionsverstärker (AP2) mit einem ersten Eingang (202), der an die zweite Klemme (B20) angeschlossen ist, wobei ein zweiter Eingang (203) die zweite Bezugsspannung (K2) über einen ersten Widerstand (210) aufnimmt, und mit einem Ausgang (205), und
    - einen zweiten Schaltkreis (TG2) mit einem Eingang (230), der an den Ausgang (205) des zweiten Verstärkers (AP2) angeschlossen ist, und einem Ausgang (240), der sich dazu eignet, ein zweites Auslösesignal abzugeben.

20. Station nach den Ansprüchen 17 bis 19,
    **dadurch gekennzeichnet, dass**
    die Logikeinheit (EL) umfasst:

    - eine Kippschaltung (D) mit einem ersten Eingang (302), der an den Ausgang des ersten Schaltkreises (TG1) angeschlossen ist, wobei ein zweiter Eingang (304) an den Ausgang des zweiten Schaltkreises (TG2) angeschlossen ist, und mit einem Ausgang, und
    - Integrationseinrichtungen (INT) mit einem Eingang, der an den Ausgang der Kippschaltung (D) angeschlossenen ist, und einem Ausgang (S), der die auf diese Weise übertragenen Daten liefert.

21. Station nach einem der Ansprüche 16 bis 20,
    **dadurch gekennzeichnet, dass**
    das Verhältnis des Werts des zusätzlichen Widerstandsglieds (DR1) zum Widerstandswert des stationsseitigen induktiven Elements (L1) höher ist als ein ausgewählter Wert.

22. Station nach einem der Ansprüche 16 bis 21,
    **dadurch gekennzeichnet, dass**
    die Station eine induktive Brücke umfasst, die das stationsseitige induktive Element bildet.

23. Station nach Anspruch 22,
    **dadurch gekennzeichnet, dass**
    das induktive Element der Station durch eine Brücke gebildet ist, deren Höhen- und Breitenabmessungen den Durchgang eines aufrechtstehenden Menschen zulassen.

24. Station nach einem der Ansprüche 16 bis 23,
    **dadurch gekennzeichnet, dass**
    die stationsseitigen Verarbeitungseinrichtungen darüber hinaus Phasenverstärkungseinrichtungen umfassen, die sich dazu eignen, vor deren Verarbeitung, die Schwankung des Phasenunterschieds (Dφ) zwischen der ersten (VEX) und der zweiten (VEY) Spannung zu verstärken.

**25.** Station nach Anspruch 24, **dadurch gekennzeichnet, dass** die Phasenverstärkungseinrichtungen umfassen:

- eine erste Gleichrichterschaltung (1000), die sich dazu eignet, die erste Wechselspannung (VEX) zu einem ersten Einfachwechselsignal zu verzerren, mit einem Eingang (1002), der an die erste Klemme (B10) angeschlossen ist, und einem Ausgang (1004);
- eine zweite Gleichrichterschaltung (1100), die sich dazu eignet, die zweite Wechselspannung (VEY) zu einem zweiten Einfachwechselsignal zu verzerren, mit einem Eingang (1102), der an die zweite Klemme (B20) angeschlossen ist, und einem Ausgang (1104);
- ein erstes Bandpassfilter (1200), das sich dazu eignet, einen Frequenzbereich durchzulassen, dessen Mittenfrequenz ein Vielfaches n - 1 der Frequenz der ersten Wechselspannung (VEX) ist, mit einem Eingang (1202), der an den Ausgang (1004) der ersten Verzerrungsschaltung (1000) angeschlossen ist, und einem Ausgang (1204);
- ein zweites Bandpassfilter (1300), das sich dazu eignet, einen Frequenzbereich durchzulassen, dessen Mittenfrequenz ein Vielfaches n der Frequenz der zweiten Wechselspannung (VEY) ist, mit einem Eingang (1302), der an den Ausgang (1104) der zweiten Verzerrungsschaltung (1100) angeschlossen ist, und einem Ausgang (1304);
- einen Vervielfacher (1400) mit einem ersten Eingang (1402), der an den Ausgang (1204) des ersten Bandpassfilters (1200) angeschlossen ist, einem zweiten Eingang (1404), der an den Ausgang (1304) des zweiten Bandpassfilters (1300) angeschlossen ist, und einem Ausgang. (1406);
- ein Bandpassfilter (1500), das auf die Frequenz der ersten Wechselspannung (VEX) eingestellt ist, mit einem Eingang (1502), der an den Ausgang (1406) des Vervielfachers (1400) angeschlossen ist, und einem Ausgang (1504), der sich dazu eignet, ein Signal abzugeben, das für die um einen Faktor n verstärkte Phasenschwankung zwischen der ersten (VEX) und zweiten (VEY) Spannung steht.

**26.** Station nach Anspruch 25, **dadurch gekennzeichnet, dass** n gleich 5 ist.

**27.** Station nach Anspruch 25, **dadurch gekennzeichnet, dass**

die Phasenverstärkungseinrichtungen umfassen:

- einen ersten Vervielfacher (100) mit einem positiven Eingang (102), der an die erste Klemme (B10) angeschlossen ist, einem negativen Eingang (104), der an die erste Klemme (B10) angeschlossen ist, und einem Ausgang (106);
- einen zweiten Vervielfacher (200) mit einem positiven Eingang (202), der an den Ausgang (106) des ersten Vervielfachers (100) angeschlossen ist, einem negativen Eingang (204), der an den Ausgang (106) des ersten Vervielfachers (100) angeschlossen ist, und einem Ausgang (206);
- einen ersten Addierer (300) mit einem, einen ausgewählten Verstärkungsfaktor aufweisenden, ersten Eingang (302), der an den Ausgang des zweiten Vervielfachers angeschlossen ist, einem, einen ausgewählten Verstärkungsfaktor aufweisenden, zweiten Eingang (304), der an den Ausgang (106) des ersten Vervielfachers (100) angeschlossen ist, und einem Ausgang (300), der sich dazu eignet, ein Signal abzugeben, das für ein Vielfaches n - 1 der Frequenz der ersten Wechselspannung (VEX) steht;
- einen dritten Vervielfacher (350) mit einem ersten positiven Eingang (352), der an die zweite Klemme (B20) angeschlossen ist, einem zweiten positiven Eingang, der an die zweite Klemme (B20) angeschlossen ist, und einem Ausgang;
- einen vierten Vervielfacher (400) mit einem positiven Eingang (402), der an den Ausgang (356) des dritten Vervielfachers (350) angeschlossen ist, einem negativen Eingang (404), der an die zweite Klemme (B20) angeschlossen ist, und einem Ausgang (406);
- einen fünften Vervielfacher (500) mit einem positiven Eingang (502), der an den Ausgang (406) des vierten Vervielfachers (400) angeschlossen ist, einem negativen Eingang (504), der an den Ausgang (356) des dritten Vervielfachers (350) angeschlossen ist, und einem Ausgang (506);
- einen zweiten Addierer (550) mit einem, einen ausgewählten Verstärkungsfaktor aufweisenden, ersten Eingang (552), der an den Ausgang des fünften Vervielfachers (500) angeschlossen ist, einem, einen ausgewählten Verstärkungsfaktor aufweisenden, zweiten Eingang (354), der an den Ausgang (406) des vierten Vervielfachers (400) angeschlossen ist, einem, einen ausgewählten Verstärkungsfaktor aufweisenden, dritten Eingang (556), der an die zweite Klemmen (B20) angeschlossen ist, und einem Ausgang (358), der sich dazu eignet, ein Signal abzugeben, das für ein Vielfaches n der Frequenz der zweiten Wechselspannung (VEY) steht;

- einen sechsten Vervielfacher (600) mit einem ersten positiven Eingang (602), der an den Ausgang (306) des ersten Addierers (300) angeschlossen ist, einem zweiten positiven Eingang (604), der an den Ausgang (558) des zweiten Addierers (550) angeschlossen ist, und einem Ausgang (606);

- ein Bandpassfilter (700), das auf die Frequenz der ersten Wechselspannung (VEX) eingestellt ist, und mit einem Eingang (702), der an den Ausgang (606) des sechsten Vervielfachers (600) angeschlossen ist, und einem Ausgang (704), der sich dazu eignet, ein Signal abzugeben, das für die um einen Faktor n verstärkte Phasenschwankung zwischen der ersten (VEX) und der zweiten (VEY), , Wechselspannung steht.

## Claims

1. Device for remote information exchange between a station (12) and a portable object (10), in which the station (12) comprises an alternating voltage generator (G) able to supply a first selected voltage (VEX), a station inductive element (L1) and station processing means (MTS), and in which the portable object (10) comprises an electronic circuit (3) switchable between an inactive state and an active state, where it forms a circuit coupled to the station inductive element (L1), and object processing means (MTO) able to switch the electronic circuit (3) as a function of information to be transmitted to the station, **characterized in that** the station (12) also comprises a station resistive element (RC) having a first terminal (B10) connected to the voltage generator (G) and a second terminal (B20) connected to an arrangement in series having the station inductive element (L1) and a station capacitive element (C1), said arrangement being able to produce a second alternating voltage (VEY), **in that** in the active state of the switchable electronic circuit (3), the resistive value of the station inductive element (L1) is increased by an additional resistive value (DR1), whereas in the inactive state said resistive value of the station inductive element (L1) is unchanged, so that the switching of the electronic circuit between its active state and its inactive state and vice versa varies the phase difference (Dφ) between the first (VEX) and second (VEY) alternating voltages, whilst the values of the elements of the electronic circuit (3) and those of the station (R1, C1, L1, RC) are selected so that the variation of the phase difference (Dφ) induced by the switching of the electronic circuit (3) exceeds a predetermined threshold and **in that** the station processing means (MTS) are able to process said phase difference variation (Dφ) in order to deduce said information therefrom.

2. Device according to one of the preceding claims, **characterized in that** the station processing means (MTS) comprise:

- a first matching circuit (CA1) able to convert the first alternating voltage (VEX) into a first square-wave signal (VTTLX) and having a first input connected to the first terminal (B10), a second input receiving a first reference voltage (K1) and an output,

- a second matching circuit (CA2) able to convert the second alternating voltage (VEY) into a second square-wave signal (VTTLY) and having a first input connected to the second terminal (B20), a second input receiving a second reference voltage (K2) and an output,

- a logic unit (EL) having a first input connected to the output of the first matching circuit (CA1), a second input connected to the output of the second matching circuit (CA2) and an output able to supply binary information (S) induced by the phase variations between the thus converted, first and second alternating voltages.

3. Device according to claim 2, **characterized in that** the first matching circuit (CA1) comprises:

- a first, non-inverting, operational amplifier (AP1) having a first input (102) connected to the first terminal (B10), a second input (103) receiving the first reference voltage (K1) across a first resistor (110), and an output (105),

- a first switching circuit (TG1) having an input (130) connected to the output (105) of the first amplifier (AP1) and an output (140) able to supply a first trigger signal.

4. Device according to claim 2, **characterized in that** the second matching circuit (CA2) comprises:

- a second, non-inverting, operational amplifier (AP2) having a first input (202) connected to the second terminal (B20), a second input (203) receiving the second reference voltage (K2) across a first resistor (210) and an output (205), and

- a second switching circuit (TG2) having an input (230) connected to the output (205) of the second amplifier (AP2) and an output (240) able to supply a second trigger signal.

5. Device according to claims 2 to 4, **characterized in that** the logic unit (EL) comprises:

- a flip-flop (D) having a first input (302) connected to the output of the first switching circuit (TG1), a second input (304) connected to the output of the second switching circuit (TG2) and an output and

- integrating means (INT) having an input connected to the output of the flip-flop (D) and an output (S) supplying the thus transmitted information.

6. Device according to one of the preceding claims, **characterized in that** the ratio of the value of the additional resistive term (DR1) to the resistive value of the station inductive element (L1) is greater than a selected value.

7. Device according to one of the preceding claims, **characterized in that** the station comprises an inductive frame forming the station inductive element.

8. Device according to one of the preceding claims, **characterized in that** the portable object is a card, badge, chip card or the like.

9. Device according to claims 7 and 8, **characterized in that** the inductive element of the station is formed by a frame, whose height and width dimensions allow the passage of a man standing upright, whereas the dimensions of the inductive element of the portable object have the format of a chip card.

10. Device according to any one of the preceding claims, **characterized in that** the station processing means also comprise phase amplification means able to amplify the phase difference variation (Dφ) between the first (VEX) and second (VEY) voltages prior to the processing thereof.

11. Device according to claim 9, **characterized in that** the phase amplification means comprise:

- a first rectifier circuit (1000) able to distort the first alternating voltage (VEX) into a first mono-alternation signal, and having an input (1002) connected to the first terminal (B10) and an output (1004),

- a second rectifier circuit (1100) able to distort the second alternating voltage (VEY) to a second mono-alternation signal and having an input (1102) connected to the second terminal (B20) and an output (1104),

- a first band-pass filter (1200) able to permit the passage of a frequency range centred on a multiple n-1 of the frequency of the first alternating voltage (VEX) and having an input (1202) connected to the output (1004) of the first distortion or rectifier circuit (1000) and an output (1204),

a second band-pass filter (1300) able to allow the passage of a frequency range centred on a multiple n of the frequency of the second alternating voltage (VEY) and having an input (1302) connected to the output (1104) of the second rectifier or distortion circuit (1100) and an output (1304),

- a multiplier (1400) having a first input (1402) connected to the output (1204) of the first band-pass filter (1200), a second input (1404) connected to the output (1304) of the second band-pass filter (1300) and an output (1406),

- a low-pass filter (1500) regulated to the frequency of the first alternating voltage (VEX) and having an input (1502) connected to the output (1406) of the multiplier (1400) and an output (1504) able to supply a signal representative of the phase variation between the first (VEX) and second (VEY) voltages amplified by a factor n.

12. Device according to claim 11, **characterized in that** n is equal to five.

13. Device according to claim 10, **characterized in that** the phase amplification means comprise:

- a first multiplier (100) having a positive input (102) connected to the first terminal (B10) and a negative input (104) connected to the first terminal (B10) and an output (106),

- a second multiplier (200) having a positive input (202) connected to the output (106) of the first multiplier (100), a negative input (204) connected to the output (106) of the first multiplier (100) and an output (206),

- a first adder (300) having a first input (302) with a selected gain and connected to the output of the second multiplier, a second input (304) having a selected gain and connected to the output (106) of the first multiplier (100) and an output (300) able to supply a signal representative of a multiple n-1 of the frequency of the first alternating voltage (VEX),

- a third multiplier (350) having a first positive input (352) connected to the second terminal (B20), a second positive input connected to the second terminal (B20) and an output,

- a fourth multiplier (400) having a positive input (402) connected to the output (356) of the third multiplier (350), a negative input (404) connected to the second terminal (B20) and an output (406),

- a fifth multiplier (500) having a positive input (502) connected to the output (406) of the fourth multiplier (400), a negative input (504) connected to the output (356) of the third multiplier (350) and an output (506),

- a second adder (550) having a first input (552) with a selected gain connected to the output (506) of the fifth multiplier (500), a second input (354) having a selected gain and connected to the output (406) of the fourth multiplier (400), a third input (556) with a selected gain and connected to the second terminal (B20) and an output (358) able to supply a signal representative of a multiple n of the frequency of the second alternating voltage (VEY),

- a sixth multiplier (600 having a first positive input (602) connected to the output (306) of the first adder (300), a second positive input (604) connected to the output (558) of the second adder (550) and an output (606),

- a low-pass filter (700) regulated to the frequency of the first alternating voltage (VEX) and having an input (702) connected to the output (606) of the sixth multiplier (600) and an output (704) able to supply a signal representative of the phase variation between the first (VEX) and second (VEY) alternating voltages amplified by a factor n.

14. Installation, **characterized in that** it comprises a plurality of remote information exchange devices according to one of the preceding claims, whose stations are essentially joined to one another.

15. Station belonging to a device for remote information exchange between a station (12) and a portable object (10), in which the station (12) comprises an alternating voltage generator (G) able to supply a first selected voltage (VEX), a station inductive element (L1) and station processing means (MTS), and in which the portable object (10) comprises an electronic circuit (3) switchable between an inactive state and an active state, where it forms a circuit coupled to the station inductive element (L1), and object processing means (MTO) able to switch the electronic circuit (3) as a function of information to be transmitted to the station, **characterized in that** the station (12) also comprises a station resistive element (RC) having a first terminal (B10) connected to the voltage generator (G) and a second terminal (B20) connected to an arrangement in series having the station inductive element (L1) and a station capacitive element (C1), said arrangement being able to produce a second alternating voltage (VEY), **in that** in the active state of the switchable electronic circuit (3), the resistive value of the station inductive element (L1) is increased by an additional resistive value (DR1), whereas in the inactive state said resistive value of the station inductive element (L1) is unchanged, so that the switching of the electronic circuit between its active state and its inactive state and vice versa varies the phase difference (Dφ) between the first (VEX) and second (VEY) alternating voltages, whilst the values of the elements of the electronic circuit (3) and those of the station (R1, C1, L1, RC) are selected so that the variation of the phase difference (Dφ) induced by the switching of the electronic circuit (3) exceeds a predetermined threshold and **in that** the station processing means (MTS) are able to process said phase difference variation (Dφ) in order to deduce said information therefrom.

16. Station for remote information exchange with a portable object (10) having an active state and an inactive state, the station (12) being of the type comprising an alternating voltage generator (G) able to supply a first selected voltage (VEX), a station inductive element (L1) for forming a circuit coupled to the portable object, and station processing means (MTS), **characterized in that** the station (12) also comprises a station resistive element (RC) having a first terminal (B10) connected to the voltage generator (G) and a second terminal (B20) connected to an arrangement in series having the station inductive element (L1) and a station capacitive element (C1), said arrangement being able to produce a second alternating voltage (VEY), **in that** in the active state of the portable object, the resistive value of the station inductive element (L1) is increased by an additional resistive value (DR1), whereas in the inactive state said resistive value of the station inductive element (L1) is unchanged, so that the switching of the portable object between its active state and its inactive state and vice versa is intended to vary the phase difference (Dφ) between the first (VEX) and second (VEY) alternating voltages, whilst the values of the portable object and the station (R1, C1, L1, RC) are intended to be selected so that the phase difference variation (Dφ) induced by the switching of the portable object exceeds a predetermined threshold and **in that** the station processing means (MTS) are able to process said phase difference variation (Dφ) in order to deduce therefrom the information transmitted by the portable object.

**17.** Station according to claim 16, **characterized in that** the station processing means (MTS) comprise:

- a first matching circuit (CA1) able to convert the first alternating voltage (VEX) into a first square-wave signal (VTTLX) and having a first input connected to the first terminal (B10), a second input receiving a first reference voltage (K1) and an output,

- a second matching circuit (CA2) able to convert the second alternating voltage (VEY) into a second square-wave signal (VTTLY) and having a first input connected to the second terminal (B20), a second input receiving a second reference voltage (K2) and an output,

- a logic unit (EL) having a first input connected to the output of the first matching circuit (CA1), a second input connected to the output of the second matching circuit (CA2) and an output able to supply binary information (S) induced by the phase variations between the thus converted, first and second alternating voltages.

**18.** Station according to claim 17, **characterized in that** the first matching station (SA1) comprises:

- a first, non-inverting, operational amplifier (AP1) having a first input (102) connected to the first terminal (B10), a second input (103) receiving the first reference voltage (K1) across a first resistor (110) and an output (105),
- a first switching circuit (TG1) having an input (130) connected to the output (105) of the first amplifier (AP1) and an output (140) able to supply a first trigger signal.

**19.** Station according to claim 17, **characterized in that** the second matching circuit (CA2) comprises:

- a second, non-inverting, operational amplifier (AP2) having a first input (202) connected to the second terminal (B20), a second input (203) receiving the second reference voltage (k2) across a first resistor (210) and an output (205) and

- a second switching circuit (TG2) having an input (230) connected to the output (205) of the second amplifier (AP2) and an output (240) able to supply a second trigger signal.

**20.** Station according to claim 17 to 19, **characterized in that** the logic unit (EL) comprises:

- a flip-flip (D) having a first input (302) connected to the output of the first switching circuit (TG1), a second input (304) connected to the output of the second switching circuit (TG2) and an output and

- integrating means (INT) having an input connected to the output of the flip-flop (D) and an output (S) supplying the thus transmitted information.

**21.** Station according to one of the claims 16 to 20, **characterized in that** the ratio of the value of the additional resistive term (DR1) to the resistive value of the station inductive element (L1) exceeds a selected value.

**22.** Station according to one of the claims 16 to 21, **characterized in that** the station comprises an inductive frame forming the station inductive element.

**23.** Station according to claim 22, **characterized in that** the station inductive element is formed by a frame, whose height and width dimensions permit the passage of a man in the upright position.

**24.** Station according to any one of the claims 16 to 23, **characterized in that** the station processing means also comprise phase amplification means able to amplify the phase difference variation (D$\phi$) between the first (VEX) and second (VEY) voltages prior to the processing thereof.

**25.** Station according to claim 24, **characterized in that** the phase amplification means comprise:

- a first rectifier circuit (1000) able to distort the first alternating voltage (VEX) into a first mono-alternation signal and having an input (1002) connected to the first terminal (B10) and an output (1004),

- a second rectifier circuit (1100) able to distort the second alternating voltage (VEY) into a second mono-alternation signal and having an input (1102) connected to the second terminal (B20) and an output (1104),

- a first band-pass filter (1200) able to allow the passage of a frequency range centred on a multiple n-1 of the frequency of the first alternating voltage (VEX) and having an input (1202) connected to the output (1004) of the first distortion or rectifier circuit (1000) and an output (1204),

- a second band-pass filter (1300) able to allow the passage of a frequency range centred on a multiple n of the frequency of the second alternating voltage (VEY) and having an input (1302) connected to the output (1104) of the second distortion or rectifier circuit (1100) and an output (1304),

- a multiplier (1400) having a first input (1402) connected to the output (1204) of the first band-pass filter (1200), a second input (1404) connected to the output (1304) of the second band-pass filter (1300) and an output (1406),

- a low-pass filter (1500) regulated to the frequency of the first alternating voltage (VEX) and having an input (1502) connected to the output (1406) of the multiplier (1400) and an output (1504) able to supply a signal representative of the phase variation between the first (VEX) and second (VEY) voltages amplified by a factor n.

26. Station according to claim 25, **characterized in that** n is equal to five.

27. Station according to claim 25, **characterized in that** the phase amplification means comprise:

- a first multiplier (100) having a positive input (102) connected to the first terminal (B10), a negative input (104) connected to the first terminal (B10) and an output (106),

- a second multiplier (200) having a positive input (202) connected to the output (106) of the first multiplier (100), a negative input (204) connected to the output (106) of the first multiplier (100) and an output (206),

- a first adder (300) having a first input (302) with a selected gain and connected to the output of the second multiplier, a second input (304) having a selected gain and connected to the output (106) of the first multiplier (100) and an output (300) able to supply a signal representative of a multiple n-1 of the frequency of the first alternating voltage (VEX),

- a third multiplier (350) having a first positive input (352) connected to the second terminal (B20), a second positive input connected to the second terminal (B20) and an output,

- a fourth multiplier (400) having a positive input (402) connected to the output (356) of the third multiplier (350), a negative input (404) connected to the second terminal (B20) and an output (406),

- a fifth multiplier (500) having a positive input (502) connected to the output (406) of the fourth multiplier (400, a negative input (504) connected to the output (356) of the third multiplier (350) and an output (506),

- a second adder (550) having a first input (552) with a selected gain and connected to the output (506) of the fifth multiplier (500), a second input (354) having a selected gain and connected to the output (406) of the fourth multiplier (400), a third input (556) with a selected gain and connected to the second terminal (B20) and an output (358) able to supply a signal representative of a multiple n of the frequency of the second alternating voltage (VEY),

- a sixth multiplier (600) having a first positive input (602) connected to the output (306) of the first adder (300), a second positive input (604) connected to the output (558) of the second adder (550) and an output (606),

- a low-pass filter (700) regulated to the frequency of the first alternating voltage (VEX) and having an input (702) connected to the output (606) of the sixth multiplier (600) and an output (704) able to supply a signal representative of the phase variation between the first (VEX) and second (VEY) alternating voltages amplified by a factor n.

# FIG.1

# FIG.2

*FIG.3*

FIG. 4A

FIG. 4B

FIG. 4C

FIG. 4D

FIG. 4E

FIG. 4F

*FIG.5*

FIG.6

FIG.7

$$A_0 + \sum_1^\infty [a_n \cos(n\omega_0 t) + b_n \sin(n\omega_0 t)]$$

$\sin(\omega_0 t)$

1002 — 1000 — 1004 — 1202 — 1200 — 1204 $E_n \sin(4\omega_0 t + \varphi_n)$

1402

1400 — 1406 $G\sin(9\omega_0 t + 5\varphi + \varphi_1) + H\sin(\omega_0 t + 5\varphi + \varphi_2)$

1404

1502 — 1500 — 1504 $H\sin(\omega_0 t + 5\varphi + \varphi_2)$

$$B_0 + \sum_1^\infty [c_k \cos(k\omega_0 t + k\varphi) + d_k \sin(k\omega_0 t + k\varphi)]$$

$\sin(\omega_0 t + \varphi)$

1102 — 1100 — 1104 — 1302 — 1300 — 1304

$F_k \sin(5\omega_0 t + 5\varphi + \varphi_k)$

EP 0 649 110 B1